**Europäisches Patentamt**

**European Patent Office**

**Office européen des brevets**

(11) Publication number: **0 076 498**

**B1**

(12) **EUROPEAN PATENT SPECIFICATION**

(45) Date of publication of patent specification: **17.12.86**

(51) Int. Cl.⁴: **B 23 K 9/02, G 05 B 19/42**

(21) Application number: **82109112.1**

(22) Date of filing: **02.10.82**

(54) **A method controlling an arc welding torch of a welding robot.**

(30) Priority: **07.10.81 JP 158627/81**

(43) Date of publication of application:
**13.04.83 Bulletin 83/15**

(45) Publication of the grant of the patent:
**17.12.86 Bulletin 86/51**

(84) Designated Contracting States:
**AT CH DE FR LI SE**

(56) References cited:
**EP-A-0 021 856**
**EP-A-0 035 282**
**EP-A-0 036 374**
**EP-A-0 042 202**
**DE-A-3 039 094**
**FR-A-2 223 126**
**FR-A-2 357 327**
**GB-A-2 090 434**
**GB-A-2 096 362**
**US-A-4 151 395**
**US-A-4 316 075**

(73) Proprietor: **MESSER GRIESHEIM GMBH**
**Hanauer Landstrasse 330**
**D-6000 Frankfurt/Main 1 (DE)**

(73) Proprietor: **Yaskawa Electric Mfg. Co., Ltd.**
**2346, Oaza Fujita Yahatanishi-ku**
**Kitakyushu-shi Fukuoka-ken (JP)**

(72) Inventor: **Nio, Satoru**
**Kosagida 12 Yahata Nishiku**
**Kitakyushu City (JP)**
Inventor: **Hamashima, Toyoharu**
**4-Kumi Tagadanchi**
**Nakama City Fukuoka Prefecture (JP)**
Inventor: **Sato, Shinobu**
**1-4-1 Tenraiji Tobata Ku**
**Kitakyushu City (JP)**
Inventor: **Nobayashi, Shigemi**
**Kosagida 12-16 Yahata Nishiku**
**Kitakyushu City (JP)**

(74) Representative: **Roesner, Werner**
**MESSER GRIESHEIM GmbH Patentabteilung**
**Postfach 3746 Hanauer Landstrasse 330**
**D-6000 Frankfurt/Main 1 (DE)**

Courier Press, Leamington Spa, England.

## Description

The invention relates to a method controlling an arc welding torch of a welding robot whereby a welding torch is moved along a weld line based on a teaching line while making a welding torch tip perform a weaving operation by altering its direction of movement.

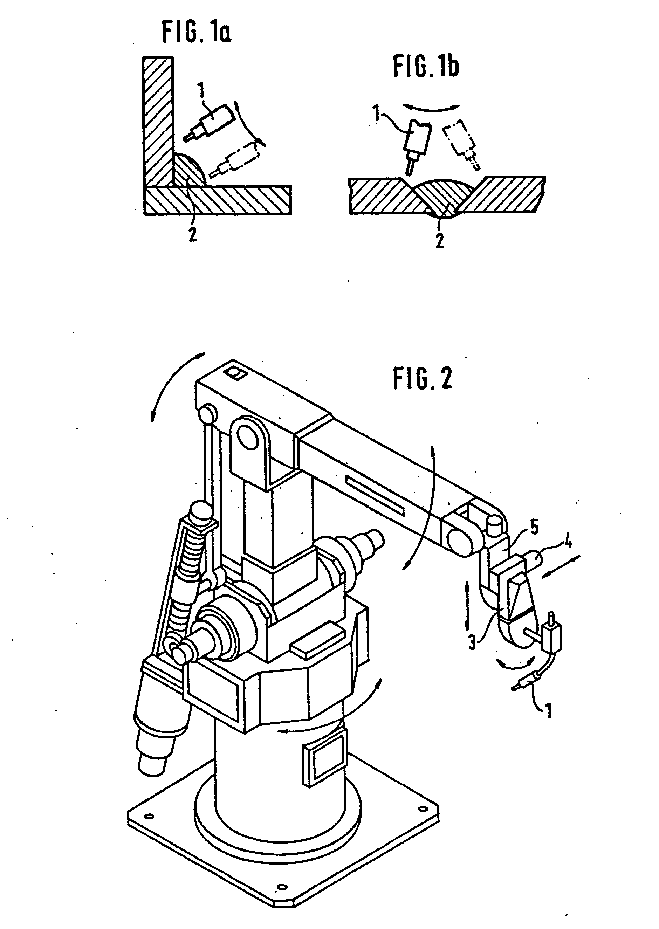

In effecting fillet welding as shown in Figure 1a or single-V groove welding as shown in Figure 1b with a conventional consumable electrode arc welding apparatus, a carriage carrying a welding torch 1, which is capable of weaving motion, is made to run along the groove line, in which the weld zone is deflected when the carriage is incorrectly guided. In order to eliminate this problem, an automatic weld line tracking and profiling controller has been proposed, in which is provided an actuator adapted to move the welding torch 1 horizontally along the weaving direction with respect to the weld line by taking advantage of a fact that the respective welding currents or the welding voltage at both extremities of the weaving differ from each other when the center of weaving of the free and of the welding torch is deflected from the weld line, the actuator is controlled so as to make the difference between the respective detected values detected at both extremities of weaving zero to form aligned weld beads, and the actuator is controlled also along the vertical direction (direction of the consumable electrode) to always make the detected values constant.

When this profiling system is applied to known cylindrical coordinates robots, polar coordinates robots, Cartesian coordinates robots or articulated robots, the arc welding robot will assume, for example, a known structure as shown in Figure 2.

Figure 2 shows a structure, in which a weaving unit 3, a horizontal drive actuator 4 and a vertical drive actuator 5 are mounted on the robot wrist and since a driving source for driving three shafts in total of two shafts of the actuators and one shaft of the weaving unit need be mounted on the robot wrist, the size and the weight of the driving source cause problems. Namely, the increased weight of the working tool increases the load on the robot wrist, which is undesirable from the viewpoint of the durability of the robot wrist. The increased size of the working tool causes difficulty in extending the robot wrist into a narrow position, thereby weld position is restricted and the versatility of the welding robot is reduced.

The invention as claimed is intended to remedy these drawbacks. It shows the problem of how to reach an easy method controlling an arc welding torch of a welding robot without increasing the size of the working tool. The advantage offered by the invention are mainly that the existing three basic drive axes of a robot are used and corrected to perform a weaving operation of the welding torch. It is not necessary to change the mechanical construction of the robot. Also the robot together with the weaving welding torch has an unrestricted versatility.

The invention and a corresponding control system for a teaching playback robot are described hereinafter with reference to the drawings.

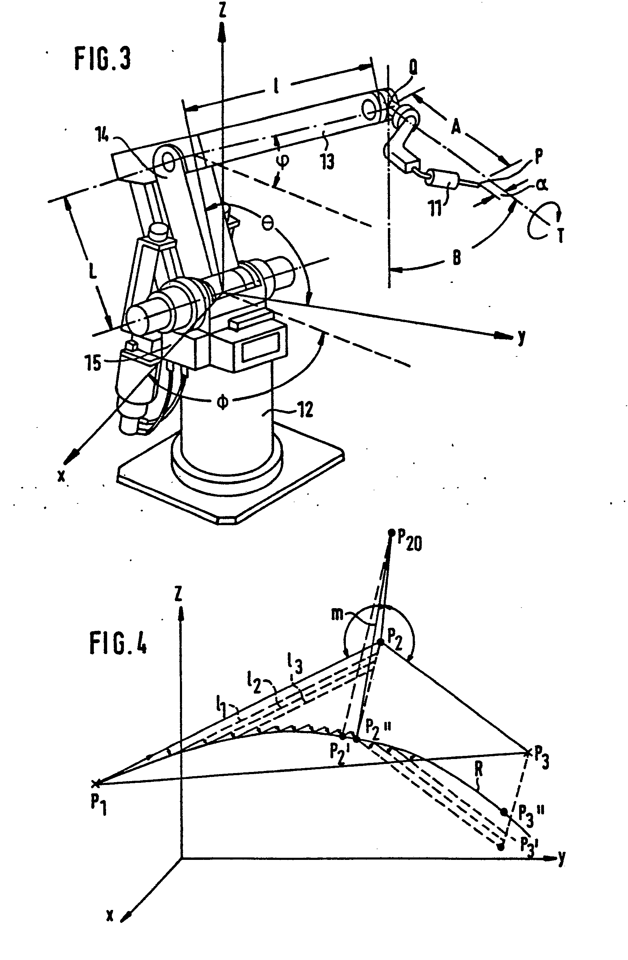

Figure 3 shows an exemplary articulated teaching playback robot which is suitable for applying the control system of the present invention, in which a consumable electrode welding torch is indicated at 11.

This welding robot includes a swivelling unit 15 having two articulated arms 13 and 14 and being mounted on a stand 12. The swing angle and the twist angle of the welding torch 11 attached to the free end of the arm 13 can be changed by means of a driving motor. The welding torch 11 is caused to perform a weaving motion by controlling the motions of the arms 13 and 14 and the swivelling unit 15.

As well known, when two points are taught to the teaching playback robot by means of a teach box, not shown, the teaching playback robot moves the welding torch 11 along a line connecting those two points through linear interpolation. Therefore, it is necessary to provide many teaching points to make the welding torch track a work weld line of a curve as shown in Figure 4 to attain correct welding in a robot having no locus correcting function.

Accordingly, an object of the invention is to provide a control system capable of making the welding torch track a work weld line R by roughly giving three teaching points P1, P2 and P3. This control system allows simple teaching work before starting welding operation, easy robot manipulation and correct welding even the work accuracy is inferior.

The principle of the control system will be described hereunder.

In order to make the center of weaving of the welding torch 11 of the robot follow the work weld line R, it is necessary to make the center of weaving always coincide with the weld line during the weaving motion for the deflection detection. The center of weaving is moved to a direction corresponding to the locus correcting signal provided at the weaving ends and then, the center of weaving is made to follow loca given by three-dimensionally parallelly shifting the previously taught locus. The three motions, i.e. the weaving motion, the movement of the center of weaving along the loca given by three-dimensionally parallelly shifting the teaching locus and the locus correcting motion for the center of weaving, are effected by the basic three shafts or the basic three elements of the robot. During weaving motion to the right and left by the same distances from the center of weaving with respect to the weld line, the center of weaving is shifted to a direction corresponding to the locus correction signal given at the ends of weaving when the locus correction signal is given, so that the center of weaving follows a newly given locus which is given by three-dimensionally parallelly shifting the teaching locus. When no locus correction signal is given, the center of weaving follows the original teaching locus while waiting for the next locus correction signal. Thus, the center of weaving reaches a point P2″ while repeating abovementioned motions.

After the point P2", i.e. the varying point, the work weld line $R$ tracking control is effected by shifting the center of weaving employing a parallel shifting direction $\overline{P2\ P3}$.

The detection of the varying point P2" for changing the parallel shifting direction can be attained by determining a varying point detection monitoring point P20 within the supplementary angle of the angle P1P2P3, continuously calculating the distance $m$ between the center of weaving of the free end of the welding torch and the monitoring point P20 and detecting a point which provides a distance greater than the minimum value of the distance by a certain width of variation.

It is preferable to set the point P20 on the bisector of angle P1P2P3.

Such tracking control allows correct weaving welding through very rough teaching as compared with the conventional method and contributes to the operation of the welding robot.

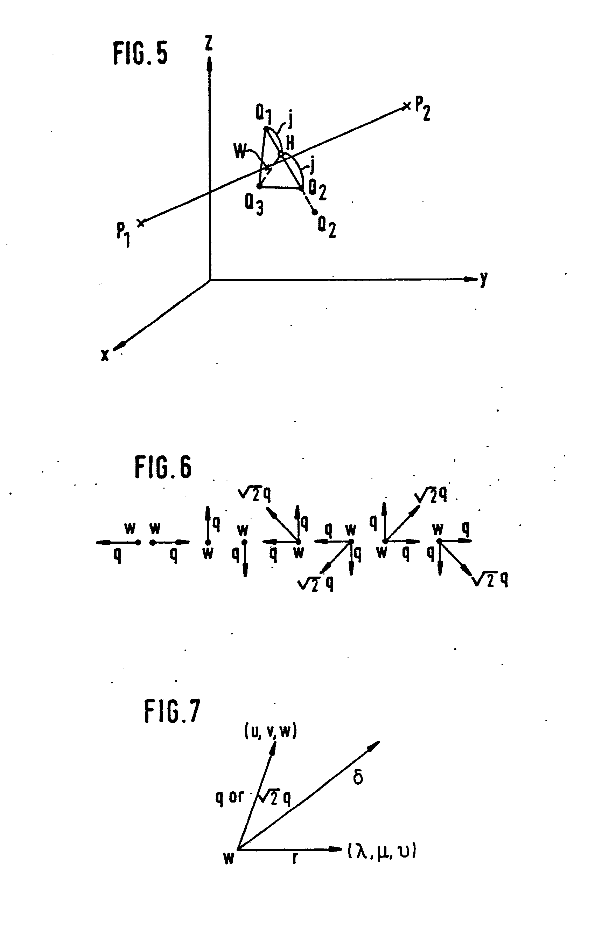

Referring to Figure 5, the weaving motion effected by the basic three shafts or basic three elements of the robot will be described hereunder.

Prior to the operation of the robot, it is necessary to teach the conditions required for profile welding, such as weaving direction, weaving amplitude and weaving frequency, to the robot.

The weaving direction and weaving amplitude are set by teaching optional three points Q1, Q2 and Q3 between the teaching point P1 and P2. The point Q3 is provided because the weaving plane cannot be determined only with the two points Q1 and Q2. A perpendicular H is drawn from the point Q3 to a line $\overline{Q1\ Q2}$ to determine the foot of the perpendicular $H$ to give a point Q2' meeting a condition $\overline{Q1\ H}=\overline{H\ Q2'}=j$, for the simple harmonic weaving motion of the same amplitude with respect to the center of weaving $H$ along a course H—Q1—H—Q2'—H

Provided that:

$$P1\ (\overline{x}_1,\ \overline{y}_1,\ \overline{z}_1),\ P2\ (\overline{x}_2,\ \overline{y}_2,\ \overline{z}_2),\ P3\ (\overline{x}_3,\ \overline{y}_3,\ \overline{z}_3), \tag{1}$$
$$Q1\ (x_1,\ y_1,\ z),\ Q2\ (x_2,\ y_2,\ z_2),\ Q3\ (x_3,\ y_3,\ z_3),$$

and

$$
\begin{aligned}
&(\alpha,\ \beta,\ \gamma) && \text{the directional cosine of } \overline{Q1\ Q2} \\
&(\alpha',\ \beta',\ \gamma') && \text{the directional cosine of } \overline{Q1\ Q3} \\
&(\lambda,\ \mu,\ \nu) && \text{the directional cosine of } \overline{P1\ P2}
\end{aligned} \tag{2}
$$

the coordinates $(x_w,\ y_w,\ z_w)$ of the point $W$ of intersection between the plane defined by point Q1, Q2 and Q3 and the line $\overline{P1\ P2}$ are defined by:

$$
\begin{aligned}
x_w &= f_1\ (x_1,\ y_1,\ z_1,\ \overline{x}_1,\ \overline{y}_1,\ \overline{z}_1,\ \alpha,\ \beta,\ \gamma,\ \alpha',\ \beta',\ \gamma',\ \lambda,\ \mu,\ \nu) \\
y_w &= f_2\ (x_1,\ y_1,\ z_1,\ \overline{x}_1,\ \overline{y}_1,\ \overline{z}_1,\ \alpha,\ \beta,\ \gamma,\ \alpha',\ \beta',\ \gamma',\ \lambda,\ \mu,\ \nu) \\
z_w &= f_3\ (x_1,\ y_1,\ z_1,\ \overline{x}_1,\ \overline{y}_1,\ \overline{z}_1,\ \alpha,\ \beta,\ \gamma,\ \alpha',\ \beta',\ \gamma',\ \lambda,\ \mu,\ \nu)
\end{aligned} \tag{3}
$$

where the symbols $f_1$, $f_2$ and $f_3$ represent functional equations.

P1, P2, P3, Q1, Q2 and Q3 are teaching points and their coordinates are known, therefore, the values $\alpha$, $\beta$, $\gamma$, $\alpha'$, $\beta'$, $\gamma'$, $\lambda$, $\mu$ and $\nu$ can easily be obtained by means of an arithmetic unit.

The center of weaving $H$ will be represented by the intersection $W$ in this description for better understanding. This center of weaving $W$ moves from the point P1 to the point P2" in Figure 4, while effecting profiling operation. The free end of the welding torch mounted on the robot wrist does not follow the locus of the point $W$, but follows a locus given by adding vector $\overrightarrow{W\ H}$ and the instant weaving distance from point $H$ to the varying value of $W$. Point $W$ follows vector $\overrightarrow{P1\ P2}$ or the three-dimensionally parallelly shifted loca $l_1$, $l_2$, ..., of the vector $\overline{P1\ P2}$.

In order to obtain the coordinates of the weaving point of the free end of the welding torch $K$ clock pulses after the free end of the welding torch has started from the point $H$, the distance $S$ through which the free end of the welding torch moves within the period of one reference clock pulse along line $\overline{Q1\ Q2'}$ is obtained:

$$S = 4hjCu \tag{4}$$

where $Cu$ is the period of the reference clock pulse and $h$ is the frequency of weaving motion.

The components $\Delta x$, $\Delta y$ and $\Delta z$ of the X, Y and Z, respectively, are represented by the following equations:

$$\Delta x = -S\alpha,\ \Delta y = -S\beta \text{ and } \Delta z = -S\gamma \tag{5}$$

The coordinates $x_k$, $y_k$ and $z_k$ on the weaving pattern after $N$ reference clock pulses is represented by equations as follows:

$$x_k = N \cdot \Delta x,\ y_k = N \cdot \Delta y,\ z_k = N \cdot \Delta z \tag{6}$$

When the free end of the welding torch returns at points Q1 and Q2' during the weaving motion through H—Q1—H—Q2'—H, naturally, the signs of $\Delta x$, $\Delta y$ and $\Delta z$ are inverted.

The length and direction of vector $\overrightarrow{W\ H}$ is always constant and the components of the vector $\overrightarrow{W\ H}$, $x_0$, $y_0$ and $z_0$ are represented by equations as follows:

$$x_0 = x_1 + j\alpha - x_w, \quad y_0 = y_1 + j\beta - y_w, \quad z_0 = z_1 + j\gamma - z_w \tag{7}$$

Thus, the free end of the welding torch is to follow a locus given by adding the coordinates of the center of weaving $W$ to equations (6) and (7). As shown in Figure 4, initially, the center of weaving $W$ starts moving along the line connecting the point P1 and the point P2 and then, the new locus I, which is parallel to the line $\overline{P1\ P2}$ by being directionally corrected corresponding to the locus correction signals produced at the ends of the weaving. Thus the center of weaving $W$ is controlled both in the correction mode and in the parallel shifting mode. The direction of locus to the right and to the left with respect to the advancing direction of the center of weaving $W$ and to the vertical direction are defined as the weaving direction, i.e. vector $\overrightarrow{Q2'\ Q1}$ and $\overrightarrow{Q1\ Q2'}$, and the vector product of vectors $\overrightarrow{Q1\ Q2'}$ and $\overrightarrow{P1\ P2}$. If the angle P2HQ2'$=\omega$, when the line $\overline{Q1\ Q2}$ is parallelly shifted and made to intersect the line $\overline{P1\ P2}$ at point $H$, the vertical directional cosine (e, f, g) is written:

$$e = f_4\ (\omega, \beta, \gamma, \mu, v), \quad f = f_5(\omega, \alpha, \gamma, \lambda, v), \quad g = f_6(\omega, \alpha, \beta, \lambda, \mu) \tag{8}$$

The transverse directional cosine is $\alpha$, $\beta$, $\gamma$.

Figure 6 shows eight kinds of transverse and vertical correction vectors.

The directional cosine of the correction vector (u, v, w) is written:

$$u = f_7(\alpha, e), \quad v = f_8(\beta, f), \quad w = f_9(\gamma, g) \tag{9}$$

When no correction is made, the advancing direction of the center of weaving $W$ is parallel to line $\overline{P1\ P2}$ and the directional cosine is ($\lambda$, $\mu$, $v$). Figure 7 shows a correction of direction, in which the center of weaving $W$ is shifted in the direction of ($\lambda$, $\mu$, $v$) by $\gamma$. The x, y and z components $\overline{\delta}x$, $\overline{\delta}y$ and $\overline{\delta}z$ of the corrected resultant vector $\delta$ of the actual center of weaving are written:

$$\overline{\delta}_x = f_{10}(r, q, \lambda, \mu, v, \alpha, \beta, \gamma, e, f, g)$$
$$\overline{\delta}_y = f_{11}(r, q, \lambda, \mu, v, \alpha, \beta, \gamma, e, f, g) \tag{10}$$
$$\overline{\delta}_z = f_{12}(r, q, \lambda, \mu, v, \alpha, \beta, \gamma, e, f, g)$$

The movement at each reference clock pulse in the parallel shifting mode to effect a specific welding speed $V$ is written:

$$\overline{x}_{no} = \frac{(\overline{x}_2 - x_1)Co \cdot V}{\sqrt{(\overline{x}_2 - \overline{x}_1)^2 + (\overline{y}_2 - \overline{y}_1)^2 + (\overline{z}_2 - \overline{z}_1)^2}}$$

$$\overline{y}_{no} = \frac{(\overline{y}_2 - \overline{y}_1)Co \cdot V}{\sqrt{(\overline{x}_2 - \overline{x}_1)^2 + (\overline{y}_2 - \overline{y}_1)^2 + (\overline{z}_2 - \overline{z}_1)^2}} \tag{11}$$

$$\overline{z}_{no} = \frac{(\overline{z}_2 - \overline{z}_1)Co \cdot V}{\sqrt{(\overline{x}_2 - \overline{x}_1)^2 + (\overline{y}_2 - \overline{y}_1)^2 + (\overline{z}_2 - \overline{z}_1)^2}}$$

The distance represented by $\delta_x'$, $\delta_y'$ and $\delta_z'$ through which the center of weaving $W$ moves in $K$ times of reference clock pulses in the parallel shifting mode except the correction mode is written:

$$\overline{\delta}_x' = \overline{x}_1 + \overline{x}_{no} \cdot K, \quad \overline{\delta}_y' = \overline{y}_1 + \overline{y}_{no} \cdot K, \quad \delta_z' = \overline{z}_1 + \overline{z}_{no} \cdot K \tag{12}$$

In the correction mode for making the center of weaving $W$ follow the vector $\delta$ of Figure 7, the movement in the $r$ direction is controlled at the specific speed $V$, therefore, the center of weaving $W$ moves for a distance $\delta$ in a time r/V. Therefore, the movement $\overline{x}_{n1}$, $\overline{y}_{n1}$ and $\overline{z}_{n1}$ in the direction of $\delta$ at a reference clock pulse is written:

$$\overline{x}_{n1} = Oo \cdot V/r \cdot \overline{\delta}_x, \quad \overline{y}_{n1} = Oo \cdot V/r \cdot \overline{\delta}_y, \quad \overline{z}_{n1} = Oo \cdot V/r \cdot \overline{\delta}_z \tag{13}$$

The movement in K' times of reference clock pulses in the correction mode is written:

$$\overline{\delta}_{x1} = \overline{x}_{n1} \cdot K', \quad \overline{\delta}_{y1} = \overline{y}_{n1} \cdot K', \quad \overline{\delta}_{z1} = z_{n1} \cdot K' \tag{14}$$

The difference between $\overline{\delta}_{x1}, \overline{\delta}_{y1}, \overline{\delta}_{z1}$ and $\overline{\delta}_x, \overline{\delta}_y, \overline{\delta}_z$ is corrected at the final stage of the correction mode so that they agree with each other.

Consequently, the coordinates x, y, z of the center of weaving $W$ after $N$ times of reference clock pulses are written:

$$x_n = \overline{\delta_x}' + \overline{\delta}_{x1} = \overline{x}_1 + \overline{x}_{n0} \cdot K + Oo \cdot V/r \cdot \overline{\delta}_x \cdot K'$$
$$y_n = \overline{\delta_y}' + \overline{\delta}_{y1} = \overline{y}_1 + \overline{y}_{n0} \cdot K + Oo \cdot V/r \cdot \overline{\delta}_y \cdot K' \qquad (15)$$
$$z_n = \overline{\delta_z}' + \overline{\delta}_{z1} = \overline{z}_1 + \overline{z}_{n0} \cdot K + Oo \cdot V/r \cdot \overline{\delta}_z \cdot K'$$
$$N = K + K' \qquad (16)$$

As described hereinbefore, the coordinates Xn, Yn, Zn of the control point of the free end of the welding torch will be controlled in accordance with the following equations:

$$Xn = x_n + x_k + x_0, \quad Yn = y_n + y_k + y_0, \quad Zn = z_n + z_k + z_0 \qquad (17)$$

In order to obtain the end point P2″ of the block, the distance $D$ between the point $P_{20}$ $(\overline{x}_{20}, \overline{y}_{20}, \overline{z}_{20})$ and the center of weaving $W$ is detected at every clock pulse and the minimum value is stored.

$$D = \sqrt{(\overline{x}_{20} - x_n)^2 + (\overline{y}_{20} - y_n)^2 + (\overline{z}_{20} - z_n)^2} \qquad (18)$$

The minimum value is updated as the center of weaving $W$ approaches the point P2. The distance $D$ becomes greater than the stored minimum value after the center of weaving $W$ has passed the point P2″. As the center of weaving $W$ moves from the point P1 to the point P2″ the distance $D$ decreases on an average, however, the value of the distance $D$ doesn't necessarily decrease in a microscopic sense depending on the correction vector in the correction mode. This problem is solved by allowing a small width of variation to the preceding minimum value. The point where the distance $D$ is smaller than the lower limit of the width of variation will be the end point of the block.

This varying point recognizing method is effective for detecting the varying point in a gentle curve as shown in Figure 4, however, it is not applicable to detecting a sharp corner such as a corner of a right angle. Accordingly, a varying point recognizing method as shown in Figures 13 and 14 is employed in combination with the described method.

The control of the robot wrist shaft will be described hereunder.

The wrist position must be controlled so that the torch angle and the advancing angle with respect to the weld line are within the respective ranges of variation which are dependent on the welding conditions. Naturally, the wrist positions at the teaching points P1, P2 and P3 are correctly taught. In the profiling welding operation from the point P1 to the point P2, the increments $\Delta B$ and $\Delta T$ are determined by:

$$\Delta B = \frac{(\overline{B}_2 - \overline{B}_1) \cdot V \cdot Oo}{\sqrt{(\overline{x}_2 - \overline{x}_1)^2 + (\overline{y}_2 - \overline{y}_1)^2 + (\overline{z}_2 - \overline{z}_1)^2}}$$

$$\Delta T = \frac{(\overline{T}_2 - \overline{T}_1) \cdot V \cdot Oo}{\sqrt{(\overline{x}_2 - \overline{x}_1)^2 + (\overline{y}_2 - \overline{y}_1)^2 + (\overline{z}_2 - \overline{z}_1)^2}} \qquad (19)$$

Where $\overline{B}_1$, $\overline{T}_1$, $\overline{B}_2$, and $\overline{T}_2$ are the values of the wrist swing shaft $B$ and the wrist twist shaft $T$ at the points P1 and P2, respectively.

The increments are added at every refrence clock pulse, and as the welding advances from the point P1 to the point P2″, they are uniformly changed irrespective of either the correction mode or the parallel shifting mode.

Thus the $Bn$ and $Tn$ after $N$ times of the reference clock pulses are:

$$Bn = \overline{B}_1 + \Delta B \cdot N, \quad Tn = \overline{T}_1 + \Delta T \cdot N \qquad (20)$$

Generally, the $B$ and $T$ at the end point P2″ will not be the same with $\overline{B}_2$ and $\overline{T}_2$ and the deflection of the work is exaggerated in Figure 4, however, actually, these differences are not significant in practical welding; since the distance between the points P2 and P2″ is small in the actual workpiece. Thus the welding torch is kept in correct position during profiling welding operation.

The values X, Y and Z of Equation (1) represent the values of the control point, the free end of the welding torch. In order to determine the equation (1), it is necessary to convert the stored data for the driving shafts of the points P1, P2, Q1, Q2 and Q3 into data for Cartesian coordinates, irrespective of the types of the robot, i.e. the Cartesian coordinates robot, articulated robot, cylindrical coordinates robot and polar coordinates robot.

The solution of the Equation (17), Xn, Yn and Zn have to be inverted to the driving shaft data of the basic three shafts of the robot in order to realize the correct position of the welding torch (Xn, Yn, Zn, Bn, Tn) at every reference clock pulse using Equations (17) and (4). The data for the robot wrist shaft are $Bn$ and $Tn$.

The basic three shafts, namely, the basic three elements, the swivelling unit 15 and arms 13 and 14, of the robot embodying the present invention as shown in Figure 3, are controlled by the respective angle of rotation $\varphi$ $\phi$ and $\theta$, while the wrist swing shaft and the wrist twist shaft are controlled by angles of rotation $B$ and $T$, respectively. The control point P is the free end of the welding torch 11.

Since the point P which is apart from the center of the wrist swing shaft and the center of the wrist twist shaft by distances $A$ and $d$, respectively is the control point which has previously been taught, the Cartesian coordinates of the point is written:

$$X=(L\cos\ \theta+l\cos\varphi+A\sin\ B+d\cos\ T\cdot\cos\ B)\cdot\cos\ \phi-d\sin\ T\cdot\sin\phi$$
$$Y=(L\cos\ \theta+l\cos\ \varphi+A\sin\ B+d\cos\ T\cdot\cos\ B)\cdot\sin\ \phi+d\sin\ T\cdot\cos\phi \qquad (21)$$
$$Z=L\sin\ \theta+l\sin\ \phi-A\cos\ B+d\cos\ T\cdot\sin\ B$$

The angles of rotation $\varphi n$, $\theta n$ and $\phi n$ of the basic three shafts of an articulated robot are determined by the following equation produced by inverting Equation (21) using $Xn$, $Yn$ and $Zn$ determined by Equation (17) and $Bn$ and $Tn$ determined by Equation (20):

$$\varphi n=f_{13}(Xn,\ Yn,\ Zn,\ Bn,\ Tn)$$
$$\theta n=f_{14}(Xn,\ Yn,\ Zn,\ Bn,\ Tn) \qquad (22)$$
$$\phi n=f_{15}(Xn,\ Yn,\ Zn,\ Bn,\ Tn)$$

Equations (21) and (22) are defined corresponding to the type of the robot.

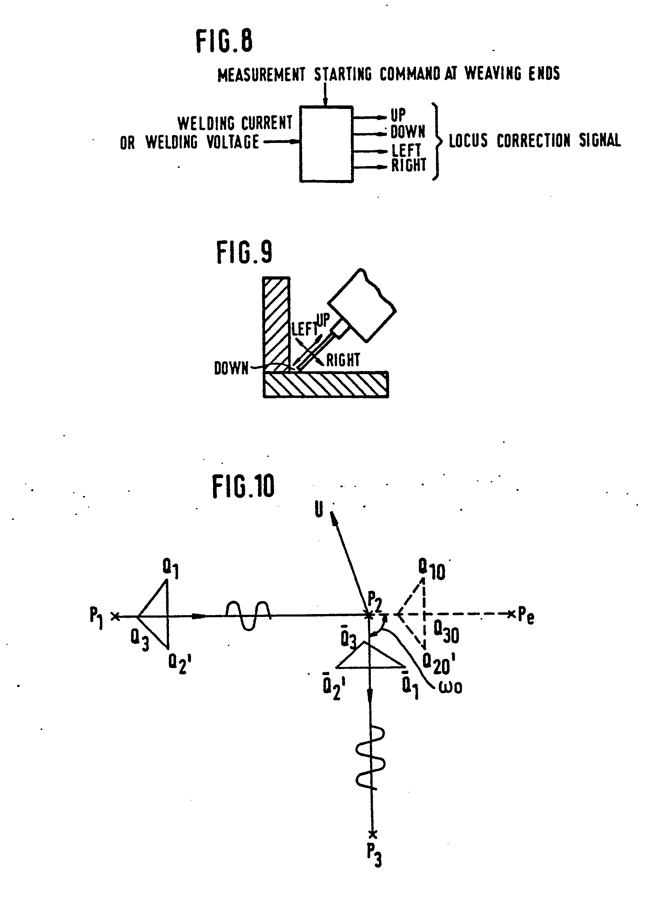

Figure 8 shows a sensor circuit capable of producing locus correction signals for shifting the center of weaving vertically and transversely by a fixed amount $q$ on the basis of the welding voltage or welding current detected at the ends of weaving.

When the teaching points Q1, Q2 and Q3, which have been described with reference to Figure 5, are given, the coordinates of the foot of the perpendicular $H$ is determined at $xh$, $yh$ and $zh$, the instant amplitude $j'$ can be determined by the instant value of the weaving $xk$, $yk$ and $zk$ (Equation (6)):

$$j'=\sqrt{(xk-xh)^2+(yk-yh)^2+(zk-zh)^2} \qquad (23)$$

The value of $j'$ becomes $j$ at the ends of the weaving where a measurement start command is given to the sensor circuit.

A "Left" signal or a "Right" signal is produced when the center of weaving of the welding torch deflects to the right or to the left, respectively, of the actual weld line. When the mean of the values at the ends of weaving is greater or smaller than a preset value, an "Up" or "Down" signal is produced. Eight combinations of such signals for vertical and transverse shifting are available (Figure 6).

Figure 9 defines the "Up", "Down", "Right" and "Left" directions used in the description. The right and left direction and the up and down direction correspond to the weaving direction and the torch direction, i.e. the feed direction of a wire electrode 11a, respectively.

Figure 10 is a view for facilitating the explanation of the automatic continuation of a weaving teaching pattern. Referring to Figure 10, the points P1, P2 and P3 are teaching points similarly to those of Figure 5, while the meaning of the points Q1, Q2' and Q3 is the same with those of Figure 5.

A point Pe is determined on the extension of line $\overline{P1\ P2}$. When the point P1 and a triangle Q1Q2'Q3 are parallelly shifted along line $\overline{P1\ P2}$ with the fixed relationship therebetween until the point P1 coincides with the point P2, line $\overline{Q1\ Q2'}$ is brought to overlie line $\overline{Q10\ Q20'}$. A line $\overline{P2\ U}$ is drawn perpendicularly to a plane defined by lines $\overline{P2\ P3}$ and $\overline{P2\ Pe}$, in which line $\overline{P2\ U}$ is drawn along the direction of the vector product of vectors $\overline{P2\ P3}$ and $\overline{P2\ Pe}$. The weaving pattern $\overline{Q1\ Q2}$ of the next block is obtained when line $\overline{Q10\ Q20'}$ is turned about line $\overline{P2\ U}$ in the direction of from line $\overline{P2\ Pe}$ to line $\overline{P2\ P3}$ through an angle P3P2Pe=$\omega_0$.

The directional cosine ($\lambda$, $\mu$, $v$) of line $\overline{P1\ P2}$ is determined by the coordinates of points P1 ($\overline{x}_1$, $\overline{y}_1$, $\overline{z}_1$) and P2 ($\overline{x}_2$, $\overline{y}_2$, $\overline{z}_2$), while the directional cosine ($\lambda'$, $\mu'$, $v'$) of line $\overline{P2\ P3}$ by the coordinates of points P2 ($\overline{x}_2$, $\overline{y}_2$, $\overline{z}_2$) and P3 ($\overline{x}_3$, $\overline{y}_3$, $\overline{z}_3$). Then, the angle $\omega_o$ is defined by:

$$\omega_o=f_{16}(\lambda,\ \mu,\ v,\ \lambda',\ \mu',\ v') \qquad (24)$$

When the coordinates of the points Q1, Q2 and Q3 are $(x_1, y_1, z_1)$, $(x_2, y_2, z_2)$ and $(x_3, y_3, z_3)$, respectively, $\overline{Q1}$ is defined by the following equation:

$$x_1'=f_{17}(\overline{x}_1,\ \overline{x}_2,\ x_1,\ y_1,\ z_1,\ \omega_0,\ \lambda,\ \mu,\ v,\ \lambda',\ \mu',\ v')$$
$$y_1'=f_{18}(\overline{y}_1,\ \overline{y}_2,\ x_1,\ y_1,\ z_1,\ w_0,\ \lambda,\ \mu,\ v,\ \lambda',\ \mu',\ v') \qquad (25)$$
$$z_1'=f_{19}(\overline{z}_1,\ \overline{z}_2,\ x_1,\ y_1,\ z_1,\ \omega_0,\ \lambda,\ \mu,\ v,\ \lambda',\ \mu',\ v')$$

$\overline{Q2'}$ $(x_2', y_2', z_2')$ and $\overline{Q3}$ $(x_3', y_3', z_3')$ also are obtained in the similar manner. The teaching of the weaving pattern and the amplitude is required to be effected only once with respect to the initial weld line. In the succeeding blocks, the weaving is automatically continued along the respective correct directions by

sequentially obtaining $\overline{Q1}$, $\overline{Q2'}$ and $\overline{Q3}$ and repeating the procedure described with reference to Figure 5. Even if a block having air-cut, in which weaving is interrupted, is included in the successive blocks, abovementioned calculation is continued, therefore, the teaching of weaving points Q1, Q2 and Q3 is unnecessary in the weld line after the air-cut. That is, only one time of teaching of the weaving points Q1, Q2 and Q3 is sufficient.

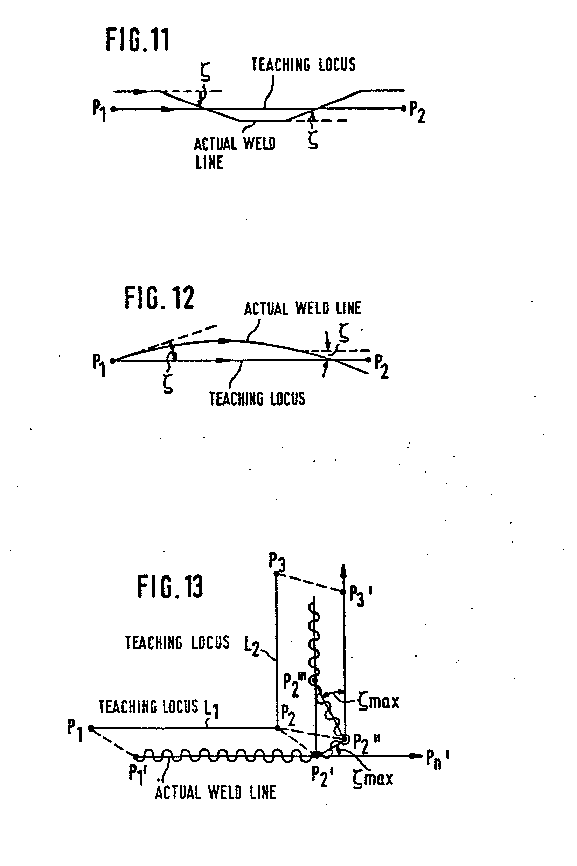

A restriction regarding profiling welding is imposed on the angle of deflection $\zeta$ of the teaching locus from the actual weld line within the same block between the teaching points P1 and P2 (Figures 11 and 12).

The maximum limit $\zeta_{max}$ of the angle of deflection $\zeta$ is dependent on the weaving frequency $h$ (Hz), welding speed $V$ (m/min) and the amount of locus correction $q$ (mm) shown in Figure 6 or $\sqrt{2}$ q (mm):

$$\zeta_{max}=\tan^{-1}\,(120\cdot h\ q/V) \tag{26}$$

or

$$\zeta_{max}=\tan^{-1}\,(120\ \sqrt{2}\ h\ q/V) \tag{27}$$

When the angle of deflection is $\zeta_{max}$ or less, the profiling welding within the same block is allowed and the weld line is deemed essentially to have no sharp corner. In this invention, however, $\zeta_{max}/2$ is determined to be the maximum limit of the angle of deflection within the same block. When $h=2$ Hz, $q=0.7$ mm and $V=300$ mm/min, $\zeta_{max}\doteqdot30°$, hence $\zeta_{max}/2\doteqdot15°$. From the viewpoint of automatic welding techniques, generally, there will be now workpiece having an angle of deflection as great at 15°, therefore, employment of $\zeta_{max}/2$ as the maximum limit of the angle of deflection will be reasonable.

Figure 13 shows the manner of profiling welding at a sharp rectangular corner in fillet welding. The welding torch advances while profiling along the actual weld line and the center of weaving reaches the point P2'. The weaving direction between the points P1' and P2' is a direction perpendicular to the direction of vector $\overline{P1\ P2}$.

When fillet welding part ends at the point P2', the welder starts to form beads on a flat plate. In this case, the robot continues profiling welding operation along the flat plate on the basis of a vector $\overrightarrow{P2'\ Pn}$ which is parallel to vector $\overline{P1\ 2}$ and the center of weaving advances in the direction of the maximum limit of angle of deflection $\zeta_{max}$ determined by the equations (26) and (27).

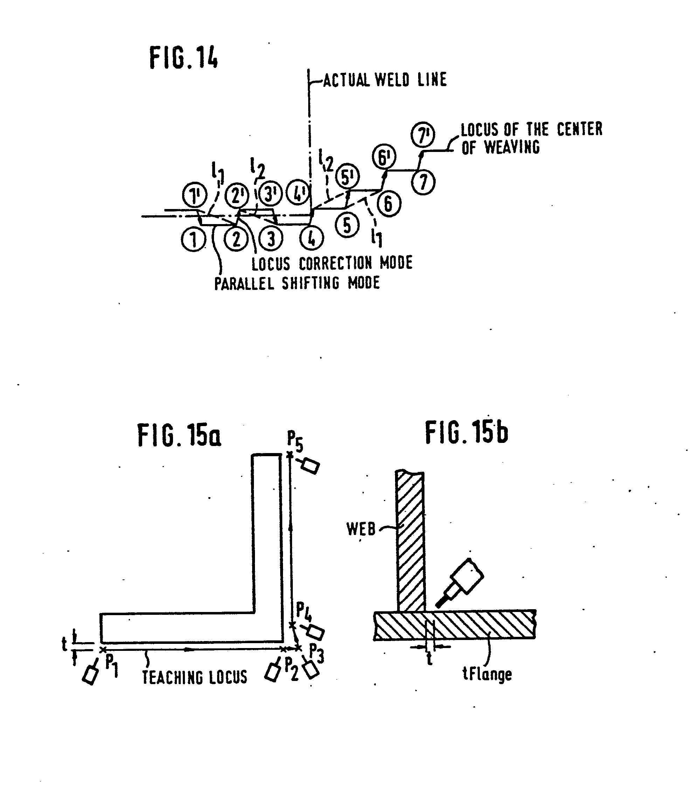

Figure 14 is an enlarged view illustrating in detail the behavior of the center of weaving in the vicinity of the point P2'. The coordinates $(x_n, y_n, z_n)$ of the center of weaving given by Equation (15) before and after the correction mode are memorized at points ①, ①②, ②, ② . . .. The angle $\xi$ between the line $\overline{P1\ P2}$ and the projection of a line $l_1$ connecting the coordinates $(x_{n-1}, y_{n-1}, z_{n-1})$ immediately before the start of a preceding correction mode and the coordinates $(x_n, y_n, z_n)$ immediately before the next correction mode on a plane defined by teaching lines $\overline{P1\cdot P2}$ and $\overline{P2\ P3}$ will be determined. The angle $\eta$ between the line $\overline{P1\ P2}$ and the projection of a line $l_2$ connecting the coordinates $(x'_n, y'_n, z'_n)$ immediately after the completion of the next correction mode and the coordinates $(x'_{n-1}, y'_{n-1}, z'_{n-1})$ immediately after completion of the preceding correction mode on the plane defined by lines $\overline{P1\ P2}$ and $\overline{P2\ P3}$ also will be determined. Since the coordinates of points P1, P2, P3, ①, ①, ②, ②, . . ., are known, the directional cosine (a, b, c) of lines ①②, ②③, ③④, . . ., the directional cosine of (a', b', c') of ①②, ②③, . . ., the directional cosine $(\lambda, \mu, v)$ of the line $\overline{P1\ P2}$ and the directional cosine $(\lambda', \mu', v')$ of the line $\overline{P2\ P3}$ can easily be determined. Thus the angles $\xi$ and $\eta$ are defined by:

$$\xi=f(\lambda,\ \mu,\ v,\ \lambda',\ \mu',\ v',\ a,\ b,\ c) \tag{28}$$

$$\eta=f(\lambda,\ \mu,\ v,\ \lambda',\ \mu',\ v',\ a',\ b',\ c') \tag{29}$$

The mean of the angles $\xi$ and $\eta$ is calculated before and after every correction mode during profiling welding operation. The calculated means are memorized sequentially in accordance with FIFO system (First in—First out). The point P2″ in Figure 13 is recognized to be a corner when the means in the FIFO system exceed $\zeta_{max}/2$ and approach the maximum limit of angle of deflection $\zeta_{max}$. Then, as explained with reference to Figure 10, the weaving direction is changed into a direction perpendicular to line $\overline{P2\ P3}$. The profiling welding operation for the next block starts on the basis of a line having its starting end at point P2″ and its ending end at point P3' determined by shifting the point P3 by a vector of displacement P3—P2″.

However, since the center of weaving of the torch is still located over the flat plate and not in the fillet part, correct fillet welding is effected after the center of weaving has moved in a direction at angle $\zeta_{max}$ to the line $\overline{P2'\ P3'}$ and has reached the point P2‴.

Since the mean of the angles $\xi$ and $\eta$ also becomes equal to the angle $\zeta_{max}$ after the corner recognition, it is necessary to provide an interlocking means to interrupt the corner recognition in this stage.

In this case the center of weaving over-turns through points P2'—P2″—P2‴, however, this over-turn is not necessarily disadvantageous. The welding of a sharp corner naturally is difficult and in teaching a sharp corner in a robot having no profiling capability, the teaching locus often is over-turned outside the weld line as shown in Figure 15 in order to prevent undercut.

Figures 15a and 15b are a plan view and a side elevation of the teaching positions and the position of the welding torch, respectively, in fillet welding operation.

In fillet welding operation, in which a comparatively large welding current is required, it is usual to deflect the aiming point of the welding torch to the flange side by a distance $t$ to prevent undercut in the web side. Since undercut is liable to occur in the web side particularly in the corner part due to increased deposition of weld, the deflection of the aiming point is increased over the distance $t$ in the corner part as shown in Figure 15. Accordingly, the corner recognition method is reasonable.

Naturally, the profiling welding in accordance with the present invention is able to provide the offset $t$ of Figure 15 by offsetting the zero point of the transverse signal comparator, not shown, of the sensor circuit by applying a bias signal to the comparator.

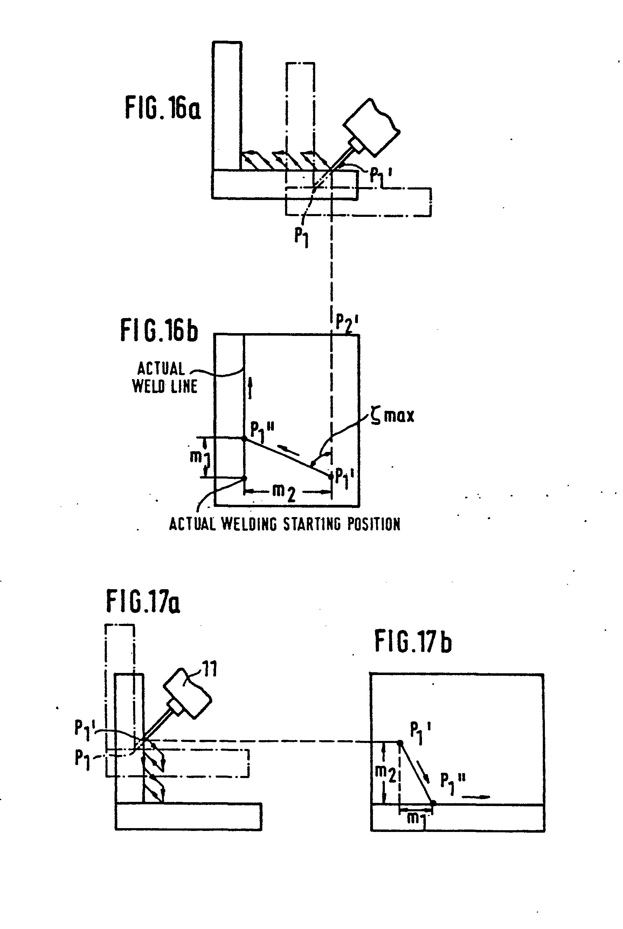

Figures 16 and 17 are views for explaining the welding starting position searching function for searching a welding starting position when the actual welding starting position is originally deflected greatly from the teaching welding starting position, which often is the case in mass production process.

When a workpiece shown by solid lines is deflected diagonally upward with respect to the correct teaching position of the workpiece shown by dotted lines in Figure 16, no corner to be fillet-welded is found and the actual welding starting point is over the flat plate, since the correct teaching welding starting position P1 on the workpiece is moved diagonally upward. When the weaving for profiling welding is started from the false welding starting position P1', the welding torch 11 is swung in the weaving direction (transverse direction) as explained with reference to Figure 9 over the flat plate, consequently, a difference in the welding current is caused between the right and the left end of weaving. Therefore, the welding torch 11 approaches the corner to be fillet-welded in the direction of the resultant vector of the leftward direction and downward direction at the angle $\zeta_{max}$, with an effort of cancelling the current difference and adjusting the welding current to a fixed value, on the basis of a vector P1' P2' which is parallel to the weld line, then starts welding operation at point P1".

In order to minimize the distance $m_1$ and to prevent the undesirable effect of unnecessary beads on the workpiece, the profiling welding is performed under a weaving condition and at a welding speed which are different from those of actual welding along the weld line while the welding torch moves from point P1' to point P1", in which the welding speed $V$ and the welding current are reduced extremely, the weaving frequency $h$ is increased and the amount of locus correction $q$ is increased to make the angle $\zeta_{max}$ of Equations (26) and (27) increase.

The method explained with reference to Figures 13 and 14 may be similarly applied to recognizing the point P1". Figure 17 a and b show the deflection of a workpiece in the reverse direction with respect to the direction of deflection of Figure 16. The manner of profiling welding operation of Figure 17 is entirely the same with that of Figure 16.

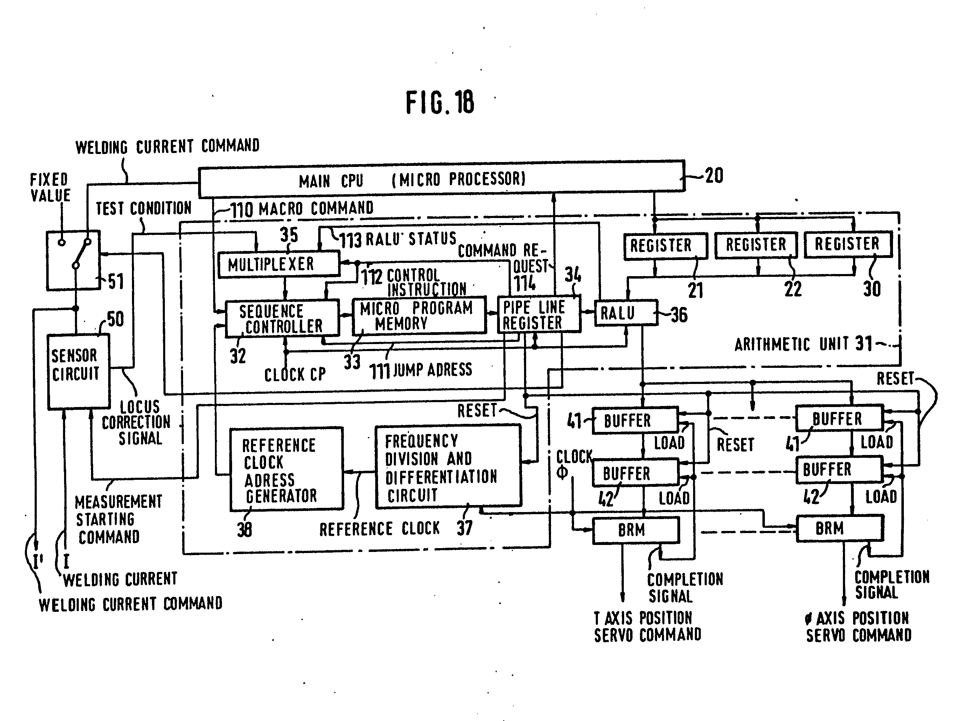

Figure 18 is a block diagram showing the connection of a profiling welding controller embodying the present invention and comprising an arithmetic unit and a BRM having a two-step buffer, a main CPU (a micro processor) for generally controlling the general robot operation, a welding current commanding and changing switch and the sensor circuit which has been described with reference to Figure 8.

To effect profiling welding operation through general sequential robot motion, the main CPU 20 has functions to read the respective number of pulses of the start position P1 and the end position P2 to be profiled, the end position P3 of a block succeeding the block to be profiled, the weaving pattern defining positions Q1, Q2 and Q3 and the distance monitoring position P20, which are specified in a teach box, not shown, from the original point of the robot basic three shafts and the robot wrist shafts, the welding speed $V$, weaving frequency $h$ and the amount of locus correction $q$, from a memory unit, not shown, to set the data in registers 21 to 30 and to provide a macrocommand to start profiling welding operation.

The arithmetic unit 31 comprises a sequence controller 32, micro program memory 33, pipe line register 34, multiplexer 35, RALU 36 (Register and Arithmetic Logical Unit), registers 21 to 30, clock $\phi$ dividing and leading edge differentiating circuit 37 and reference clock address generator 38.

The sequence controller 32 is an address controller which is capable of controlling the execution sequence of micro instructions stored in the memory 33 and is adapted to effect various addressing and stack control in response to the control instructions provided by the pipe line register 34.

More particularly, the sequence controller 32 controls the selection of the jump address which is given by the pipe line register 34, the selection of jump address which is given by the pipe line register 34 in the case of unconditional jump, and stack control during micro subroutine, in the increment of the presently executed address, the selection of address specified by the macrocommand, selection of address specified by the reference clock address generator 38 and conditional jump corresponding to the test conditions including RALU status.

Three kinds of input information for addressing are provided, which are microcommand from the CPU, the output of the reference clock address generator 38 and the output of the pipe line register 34.

According to a microprogram, namely, the control instruction of the pipe line register 34, it is decided that the sequence controller 32 selects which one of those three kinds of input information, or the sequence controller 32 selects none of them and the increment of the current address is effected.

Profiling welding control includes four macrocommands as follows:

1) A command of arc start block immediately after air cut and for effecting corner recognition at a corner to the next block in accordance with the distance monitoring method.

2) A command of arc start block immediately after air cut and for effecting corner recognition at a corner to the next block in accordance with the $(\xi+\eta)/2$ angle calculation method.

3) A command of a block for continuously performing welding operation after an arc start command

**0 076 498**

has been given in the previous block and for effecting corner recognition at a corner to the next block in accordance with the distance monitoring method.

4) A command of block for continuously performing welding operation after an arc start command has been given in the previous block and for effecting corner recognition at a corner to the next block in accordance with the $(\xi+\eta)/2$ angle calculation method.

From the semantics of hard ware, these macrocommands and the output of the reference clock address generator 38 are given in the form of indicating the first address of the respective processing microprograms. While these are not applied to the sequence controller, the jump address, subroutine call address and current address increment of the pipe line register 34 are given.

The microprogram memory 33 is the essential unit of the arithmetic unit 31. All the arithmetic processing is executed in accordance with the instructions of the microprogram.

The pipe line register 34 provides a microinstruction for operation which is to be currently executed by the buffer register of the microprogram memory 33 to the RALU 36 and also provides a control instruction for deciding the next microaddress to the sequence controller 32 and the multiplexer 35 and also a jump address, subroutine call address and current address increment to the sequence controller 32. When a corner is detected during profiling welding operation, the pipe line register 34 applies a command request requesting the coordinates data of the next block to the main CPU 20.

The pipe line register 34 is provided for forming two signal paths, making the signal paths parallelly simultaneously progress, reducing microcycle time and attaining high-speed operation.

One of the paths is the path of a control system connecting the pipe line register 34—sequence controller 32—microprogram memory 33, while the other path is the path of the arithmetic system of the pipe line register 34—RALU 36. The pipe line register 34 is provided for parallelly actuating these two paths within the same clock cycle.

Since the next instruction of the microprogram prepared by the path of the control system has already been provided at the input of the pipe line register 34 prior to the rising of the clock CP, high-speed operation equivalent to an operation of zero memory fetch time can be attained.

The multiplexer 35 gives the sequence controller 32 the eight test conditions of locus correction signals shown in Figure 6 provided by the RALU status sensing unit corresponding to the control instruction of the pipe line register 34 and causes conditional jump to the respective processing program.

The RALU 36 comprises a logical-arithmetic operation unit and a programmable register and is adapted to execute the operation instruction specified by the microprogram. Incremental pulse number of each driving shaft of the robot at every reference clock, which is the result of the operation, is stored in the predetermined register included in the RALU 36. ·

Register 21, 22, 23, 24, 25, 26 and 27 store the pulse numbers from the robot basic three shafts and the original point of the robot wrist shaft of the starting position P1, ending position P2, position P3, position Q1, position Q2, position Q3 and point P20, respectively.

The register 28, 29 and 30 store the profiling welding speed $V$, the weaving frequency $h$ and the amount of locus correction $q$, respectively. A buffer 41 is a register for storing an increment pulse number which is to be dispatched in the next reference clock of each driving shaft of the robot. A buffer 42 is a register for storing the increment pulse number being currently outlaied.

A BRM uniformly and evenly distributes the pulse number stored in the buffer 42 in pulses which are synchronous with the clock $\phi$ within the reference clock period and provides a dispatch completion signal for buffer transfer at every reference clock.

The dividing-leading edge differentiating circuit produces reference clock which is divided by the bit number of the BRM from the clock $\phi$ and differentiates the leading edge of the reference clock for synchronizing the BRM dispatch completion signal and the reference clock.

Although the main CPU 20 gives a welding current command to the welding equipment and the sensor circuit 50, the welding current command selecting switch 51 is changed by the output of the arithmetic unit in detecting-welding start position so that a fixed value is selected and when the welding start position is detected, the welding current command selecting switch 51 is changed to the side of the commanded value of the main CPU.

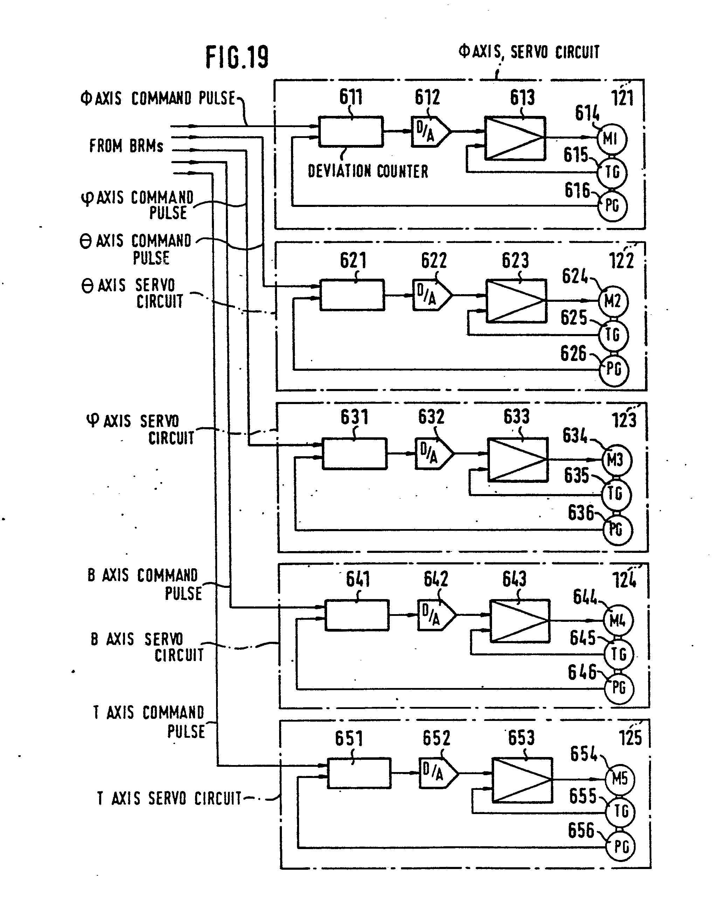

Figure 19 shows the positioning servocircuits for the basic three shafts ($\phi$-axis, $\theta$-axis, $\phi$-axis) and the two wrist shafts (shaft B, shaft T) of an articulated robot which is controlled by the command pulses dispatched from the BRM explained with reference to Figure 18.

Differences between the respective command pulses of the shafts which are given to cause the welding torch to perform a profiling welding operation while performing weaving motion, and feedback pulses provided by the pulse generators 616, 626, 636, 646 and 656, are provided by deviation counters 611, 621, 631, 641 and 651, then analog speed commands are applied to servoamplifiers 613, 623, 633, 643 and 653 through D/A converters 612, 622, 632, 642 and 652, respectively. The servoamplifiers compare the speed commands with the output signals (detected speeds) of tachogenerators 615, 625, 635, 645 and 655, respectively, and control the corresponding driving motors so as to cancel the differences between the speed commands and the output signals of the tachogenerators. By means of these positioning servo systems, the free end of the welding torch of the robot performs desired profiling welding operation in accordance with the command pulses.

9

The manner of profiling welding control operation of the control circuit of Figure 18 will be explained hereunder.

Initially, the arithmetic unit 31 is executing wait routine. When a macrocommand is applied to the sequence controller 32 by the main CPU 20, the sequence controller 32 performs address control, while receiving a control instruction from the pipe line register 34 to select the first address of its service program, to make the arithmetic unit 31 execute the wait routine.

Since the wait routine includes a command to reset the reference dividing circuit 37, no reference clock is generated.

Prior to starting profiling welding control, the main CPU 20 first sets the coordinates of the starting point P1 $(\overline{\phi}_1, \overline{\theta}_1, \overline{\phi}_1, \overline{T}_1, \overline{B}_1)$ of the profiling welding block, the ending point P2 $(\overline{\phi}_2, \overline{\theta}_2, \overline{\phi}_2, \overline{T}_2, \overline{B}_2)$, the ending point P3 $(\overline{\phi}_3, \overline{\theta}_3, \overline{\phi}_3, \overline{T}_3, \overline{B}_3)$ of the next block, weaving pattern defining points Q1 $(\phi_1, \theta_1, \phi_1, T_1, B_1)$, Q2 $(\phi_2, \theta_2, \phi_2, T_2, B_2)$ and Q3 $(\phi_3, \theta_3, \phi_3, T_3, B_3)$ in the registers 21 to 26.

The main CPU 20 also sets the profiling welding speed $V$, weaving frequency $h$ and the amount of locus correction $q$ in the registers 28 to 30. When the distance monitoring method is employed for corner recognition, the main CPU 20 sets the coordinates of the monitoring point P20 $(\phi_{20}, \theta_{20}, \phi_{20}, T_{20}, B_{20})$ in the register 27.

When one of those four macrocommands is provided by the main CPU 20, the first addresses of the respective corresponding service microprograms are selected. Those four service programs set a welding starting point detecting flag, not shown, to 1 when the block includes the welding starting point detection or reset to 0 when the block doesn't include the welding starting point detection, set a corner detecting flag, not shown, to 1 when the distance monitoring method is employed for corner detection, reset the corner detecting flag to 0 when the $(\xi+\eta)/2$ calculating method is employed, then enter them into a profiling welding processing program $N^+$. Since those four programs include a cancellation instruction for cancelling the reset signal of the reference clock dividing circuit 37, the dividing circuit 37 starts counting clock $\phi$. Then, the sequence controller 32 operates to perform addressing which is necessary to arithmetic processing until an output signal is provided by the next reference clock address generator 38.

Now, the profiling welding processing program which starts with $N^+$ will be described hereinafter.

Since profiling welding is started from a block at arc start, initially, the welding starting point flag is set to 1. Consequently, the welding speed $V$, weaving frequency $h$ and the amount of locus correction $q$ which are set in the register 28 to 30 are not used before the profiling welding operation reaches the normal welding starting position, but fixed values memorized in the arithmetic unit are used. The welding current command selecting switch 51 is changed by the output of the arithmetic unit so as to apply fixed values of the welding current command to the welding equipment and the sensor circuit 50.

The positions P1, P2, P3, Q1, Q2 and Q3, which are set in the registers, are converted to the data of the Cartesian coordinates system represented by Equation (1) by using Equation (21). When the corner detecting flag is 1, the point P20 is converted into P20 $(x_{20}, y_{20}, z_{20})$ by using Equation (21).

Then, Equations (4) and (5) are solved by using the fixed value of weaving frequency $h$ which is memorized in the arithmetic unit. Equation (11) is solved by using the fixed value of welding speed $V$. Equations (2), (3) and (7) are solved successively.

Equation (19) is solved by using the wrist shaft angle at points P1 and P2. The first address storing the processing programs after this is assumed to be $M^+$.

At the first reference clock for starting profiling welding, the welding torch is still positioned on the center of weaving, therefore, no locus correction signal is generated. In this stage, Equations (8) to (10), (13) and (14) do not participate in the operation and the arithmetic unit 31 is in the parallel shifting mode.

At the first reference clock, Equation (8) is solved with N=1. Since K'=0, Equation (16) provides K=1. Using Equations (12), (15) and (7), Xn, Yn and Zn of Equation (17) are determined.

The differences $\Delta B$ and $\Delta T$ between the solution Bn and Tn of Equation (20) and the values of Bn and Tn at the preceding reference clock (now $\overline{B}_1$ and $\overline{T}_1$) are·set in the predetermined register of the RALU 36.

The values of $\phi_n$, $\theta_n$ and $\phi_n$ of the basic three shafts are obtained by substituting the solutions Xn, Yn and Zn of Equation (17) and Bn and Tn into Equation (22) and then, the differences $\Delta\phi$, $\Delta\theta$ and $\Delta\phi$ between $\phi_n$, $\theta_n$ and $\phi_n$ and the values of $\phi_n$, $\theta_n$ and $\phi_n$ (now $\overline{\phi}_1, \overline{\theta}_1$ and $\overline{\phi}_1$) at the preceding reference clock are set in the predetermined register of RALU.

When the corner detecting flag is 1, the calculated result of Equation (18) is set in the predetermined register of RALU and the arithmetic unit 31 stands by.

This standby is different from the wait routine waiting for the macrocommand which is provided by the main CPU 20, but is a routine waiting for the next reference clock address generator output $M^+$ and the dividing circuit 37 will not be reset.

Since the clock $\phi$ and the bit number of the BRM are set so as to provide a reference clock period which is longer than a time required for completing the operations as hereinbefore described, the shortage of the operating time will not occur.

While the arithmetic unit 31 is executing the wait routine for waiting $M^+$, the BRM provides a dispatch completion signal simultaneously with the generation of a reference clock, the predetermined register of the RALU 36 loads the five buffers 41 with the values of $\Delta\phi$, $\Delta\theta$, $\Delta\phi$, $\Delta B$ and $\Delta T$, respectively, and the buffers 42 are loaded with the contents of the buffers 41.

At the first reference clock, the buffers 41 remain cleared, therefore, 0 is placed in the buffers 42 so that the BRM doesn't dispatch pulses. This reference clock actuates the reference clock address generator 38 and the execution of the microprogram is started from $M^+$ and Equation (6) is determined by substituting N=2 into the equation.

Since $j'$ of Equation (23) at the preceding reference clock is not $j$, no locus correction signal is generated so that the arithmetic unit continues the parallel shifting mode. Consequently, $K'=0$ and from Equation (16), $K=2$.

Then, the values of Xn, Yn and Zn of Equation (17) are determined by using Equations (12) and (15). The values of Bn and Tn also are determined by using Equation (20). The differences $\Delta B$ and $\Delta T$ between the values of the instant Bn and Tn and the values of the preceding, Bn and Tn are set in the predetermined register of the RALU. The values of $\phi_n$, $\theta_n$ and $\phi_n$ are determined by substituting Xn, Yn, Zn, Bn and Tn into Equation (22). The differences $\Delta\phi$, $\Delta\theta$ and $\Delta\phi$ between the respective values of $\phi_n$, $\theta_n$ and $\phi_n$ at the instant and the preceding reference clock are set in the predetermined register of the RALU. The calculated result of Equation (18) is compared with the preceding value stored in the RALU and when the instant value is smaller than the preceding one, the preceding value is replaced by the instant value.

After this, the arithmetic unit stands by and waits for the next reference clock generator output $M^+$.

At the next reference clock, the contents of the buffers 41 at the preceding reference clock are loaded in the buffers 42, while the buffers 41 are loaded with the $\Delta\phi$, $\Delta\theta$, $\Delta\phi$, $\Delta T$ and $\Delta B$ at the present reference clock, respectively and the BRM dispatches a command pulse to the respective shaft positioning servocircuits. This operation is repeated until the $j'$ of Equation (23) becomes $j$. When $j'=j$, the coordinates $x_n$, $y_n$ and $z_n$ of the center of weaving determined by Equation (15) are memorized and a measurement start command is applied to the sensor circuit 50, then the arithmetic unit 31 is changed into the locus correction mode at the next reference clock. Transverse and vertical locus correction signals produced by the sensor circuit are received by $M^+$ as test conditions. Equations (8), (10) and (13) are solved by using the values of $\alpha$, $\beta$, $\gamma$, $\lambda$, $\mu$ and $\nu$, which have previously been calculated, fixed value of g which is memorized in the arithmetic unit and the fixed value of $\gamma$. Equation (14) is calculated with $K'=1$. The coordinates of the center of weaving $(x'_n, y'_n, z'_n)$ determined by solving Equation (15) by employing the value of K at the preceding reference clock are memorized. Equation (6) is solved with $N=K+K'$. The solution of Equation (17), i.e. Xn, Yn and Zn are determined. Bn and Tn are determined and are converted into $\Delta\phi$, $\Delta\theta$, $\Delta\phi$, $\Delta T$ and $\Delta B$, which are stored in the predetermined register of RALU. Thus the BRM performs positioning servocontrol.

Equation (18) is calculated for renewal.

Then, the arithmetic unit is changed into the parallel shifting mode again, determines the values of $\phi_n$, $\theta_n$, $\phi_n$, $T_n$ and $B_n$ at every reference clock and performs positioning servocontrol on the basis of the differences $\Delta\phi$, $\Delta\theta$, $\Delta\phi$, $\Delta T$ and $\Delta B$, which are differences between the values of $\phi_n$, $\theta_n$, $\phi_n$, $T_n$ and $B_n$ at the present and the preceding reference clocks. Equation (18) also is calculated at every reference clock to save the minimum value. The parallel shifting mode is continued until $j'=j$ again. When $j'=j$ again, the directional cosine (a, b, c) of a line connecting the coordinates $(x_n, y_n, z_n)$ determined by Equation (15) and the coordinates $(x_{n-1}, y_{n-1}, z_{n-1})$ determined and memorized at the preceding reference clock is determined on the basis of the coordinates $x_n$, $y_n$, $z_n$, $x_{n-1}$, $y_{n-1}$ and $z_{n-1}$, the directional cosine $(\lambda', \mu', \nu')$ of $\overline{P2\ P3}$ is determined on the basis of the coordinates of point P2 $(\overline{x}_1, \overline{y}_2, \overline{z}_2)$ and point P3 $(\overline{x}_3, \overline{y}_3, \overline{z}_3)$ and then, the value of $\xi$ is calculated by Equation (28) by using those directional cosines and the directional cosine of $\overline{P1\ P2}$ which has previously been determined by Equation (2). The calculated value of $\xi$ is memorized in the FIFO (First In First Out).

The values of $x_n$, $y_n$ and $z_n$ memorized at the preceding reference clock are replaced by those obtained at the present reference clock. The measurement start command is given to the sensor circuit 50, then the arithmetic unit 31 is changed to the locus correction mode at the next reference clock. Equations (8), (10) and (13) are solved in response to generation of locus correction signals of the sensor circuit 50, Equation (14) is solved by assuming $K'=2$ and Equation (15) is solved with the value of K obtained at the preceding reference clock to determine the coordinates $(x'_n, y'_n, z'_n)$ of the center of weaving. The value of Equation (29) is calculated by using the directional cosine (a', b', c') of a line connecting the coordinates $(x'_n, y'_n, z'_n)$ and the coordinates $(x'_{n-1}, y'_{n-1}, z'_{n-1})$ memorized at the preceding reference clock and the previously determined directional cosines $(\lambda, \mu, \nu)$ and $(\lambda', \mu', \nu')$. The calculated value of $\eta$ is memorized in FIFO. The values of $x'_n$, $y'_n$ and $z'_n$ determined at the preceding reference clock is replaced with those determined at the present reference clock. Equation (6) is solved by assuming $N=K+K'$. The solutions Xn, Yn and Zn of Equation (17) are determined. The values of Bn and Tn are determined and converted into $\Delta\phi$, $\Delta\theta$, $\Delta\phi$, $\Delta T$ and $\Delta B$, which are placed in the predetermined register of the RALU so that the BRM performs positioning servocontrol.

Equation (18) is calculated and the value is renewed. Thus the parallel shifting mode is completed and after this, a cycle of the parallel shifting mode-locus correction mode is repeated.

Before and after the locus correction mode, the mean of $(\xi+\eta)/2$ memorized in the FIFO memory is examined if it is exceeding the half of $\zeta_{max}$ determined by Equation (26) or (27) and approaching the value of $\zeta_{max}$. When the mean value is close to the value of $\zeta_{max}$, it is recognized that the welding starting position is being detected and the profiling welding operation is continued with the fixed values of $V$, $h$ and $q$ and the welding current command selecting switch 51 switched to the side of fixed value.

When the mean value of $(\xi+\eta)/2$ decreases to a value below $\zeta_{max}/2$, it is recognized that the center of weaving reached the welding starting position, then the welding current command selecting switch 51 controls the output of the arithmetic unit so as to select the welding current instructed by the main CPU 20, changes the values of $V$, $h$ and $q$ to the respective values which are set in the registers 28 to 30, newly determines the amount of shifting of weaving at one reference clock $\Delta x$, $\Delta y$, $\Delta z$ by solving Equations (4) and (5), newly determining the values of $\bar{x}_{n0}$, $\bar{y}_{n0}$ and $\bar{z}_{n0}$ of Equation (11) and applies the value of $q$ set in the register 30 to the calculation of Equation (10). The value of $\zeta_{max}$ of Equations (26) and (27) also is newly calculated.

After this, the minimum value of Equation (18) is renewed when the corner detecting flag is 1, the values of $\xi$ and $\eta$ are saved sequentially in the FIFO memory when the corner detecting flag is 0 and the profiling welding operation is continued.

When the corner detecting flag is 1, it is determined that the center of weaving has reached the ending position of the block when the minimum value of Equation (18) reduces over a width of variation. When the corner detecting flag is 0, it is determined that the center of weaving has reached the ending position when the mean value of $(\xi+\eta)/2$ memorized in the FIFO memory is $\zeta_{max}/2$ or greater and approaching $\zeta_{max}$.

After the detection of a corner has been completed, the arithmetic unit 31 decides the direction of weaving in the next block and executes weaving pattern continuation processing to provide the same weaving amplitude as that in the preceding block. More specifically, the value of $\omega$, of Equation (24) is determined from the directional cosine $(\lambda, \mu, v)$ of $\overline{P1\ P2}$ and the directional cosine $(\lambda', \mu', v')$ of $\overline{P2\ P3}$, which have previously been determined in the preceding block and the coordinates $(x'_1, y'_1, z'_1)$ of the position Q1 of the next block, namely, the position $\overline{Q1}$ explained with reference to Figure 9 from Equation (25). Similarly, the coordinates of positions $\overline{Q2}$ and $\overline{Q3}$ are determined to replace the coordinates of positions Q1, Q2 and Q3 of Equation (1).

The position of the center of weaving at the detection of the corner is the starting position for the next block. The differences $i=(x_n-\bar{x}_2)$, $i=(y_n-\bar{y}_2)$ and $i=(z_n-\bar{z}_2)$ between those $(x_n, y_n, z_n)$ and the position P2 $(\bar{x}_2, \bar{y}_2, \bar{z}_2)$ are memorized and the values of $x_n$, $y_n$ and $z_n$ are made to represent the coordinates data $\bar{x}_2$, $\bar{y}_2$ and $\bar{z}_2$ of P1 of Equation (1).

After this, the main CPU 20 sets the pulse numbers from the origin of the five shafts of the robot at the ending position of the next block in the register 22 and after setting the pulse numbers from the origin of the five shafts of the robot at the ending positions of the successive blocks and the distance monitoring points of the successive blocks in the registers 23 and 27 the main CPU 20 gives the macrocommand to the arithmetic unit 31. This macrocommand doesn't include welding starting position detection.

The arithmetic unit 31 converts the coordinates $(\bar{\phi}_2, \bar{\theta}_2, \bar{\phi}_2, \overline{T}_2, \overline{B}_2)$ of the new ending position P2 of the block set in the register 22, the coordinates $(\bar{\phi}_3, \bar{\theta}_3, \bar{\phi}_3, \overline{T}_3, \overline{B}_3)$ of the new ending position P3 of the next block set in the register 23 and the coordinates $(\bar{\phi}_{20}, \bar{\theta}_{20}, \bar{\phi}_{20}, \overline{T}_{20}, \overline{B}_{20})$ of the new distance monitoring point P20 set in the register 27 into coordinates P2 $(x_2, y_2, z_2)$, P3 $(x_3, y_3, z_3)$ and P20 $(x_{20}, y_{20}, z_{20})$ by means of Equation (21). Coordinates obtained by shifting the coordinates P2 $(\bar{x}_2, \bar{y}_2, \bar{z}_2)$ by the amount of memorized $i_1$, $i_2$ and $i_3$ is the coordinates of the new ending position. That is, the new ending position P2 $(\bar{x}_2, \bar{y}_2, \bar{z}_2)$ is determined through conversions $\bar{x}_2+i_1 \to \bar{x}_2$, $\bar{y}_2+i_2 \to \bar{y}_2$ and $\bar{z}_2+i_3 \to \bar{z}_3$. The manner of profiling welding operation after this is entirely the same with that in the preceding block, except that the detection of welding starting position is not performed.

Since the next data is continuously supplied to the buffers 41 while the two-step buffer dispatches the command pulses, the profiling welding operation is not interrupted at corners so that smooth profiling welding is attained.

As has been described hereinbefore, the profiling welding system in accordance with the present invention is capable of attaining automatic welding with workpieces of inferior accuracy and has advantages as follows:

(1) Since nothing except a welding torch is mounted on the robot wrist, profiling welding can be attained in a very narrow space as long as the torch is allowed to enter the space.

(2) Welding starting position can be detected even if the actual welding part of a workpiece is deflected from the teaching position due to inferior accuracy of the workpiece without the need of a form recognition system such as an expensive vision system.

(3) Welding of corners of any shape can be attained smoothly and correctly through profiling welding without the need of a form recognition system and furthermore, correct welding can be attained even if the corners vary widely between workpieces.

(4) Since the weld line of a workpiece included within a profiling welding angle which is dependent on the set values of the weaving frequency, the welding speed and the amount of locus correction, can be included within the same block, the initial teaching operation is simplified and the accessibility is improved.

(5) Since teaching is required with three positions defining the weaving pattern only for the first welding block owing to the automatic weaving pattern continuation function of the system, teaching operation is facilitated.

(6) Since the sensing information is acquired from the arc phenomenon (welding current, welding voltage) instead of employing a particular sensor which is to be mounted on the robot wrist, the profiling welding system in accordance with the present invention is free from problems inherent in other ordinary sensors irrespective of their types, contact type or non-contact type, such as hindering welding operation

12

**0 076 498**

by the sensor, having a dead angle of sensing and having insufficient reliability in the sensor under unfavorable operating conditions such as welding heat, spatters and fume.

According to the present invention, automatic welding operation employing a welding robot is feasible even if the workpieces are inaccurately formed, if the workpiece is more or less deflected from the correct position or if the weld line is wavy. Thus the present invention greatly contributes to automating welding operation.

Although in the exemplary robot as shown in Figure 3, both the weaving motion control as well as the locus correction control are attained through controlling the three shafts of the robot, naturally, modifications in the design of the control system are possible, in which the weaving motion and the locus correction are separately controlled, namely, an actuator may be provided on the robot wrist independently of the driving shaft of the robot for exclusively controlling the weaving motion and only the locus correction control may be effected by means of the basic three shafts of the robot.

Brief description of the drawing

Figure 1 is an explanatory view of weaving welding,

Figure 2 is a perspective view of an arc welding robot employing a conventional weaving welding system,

Figure 3 is a perspective view of an arc welding robot embodying the present invention,

Figure 4 is an explanatory view of a profiling control system in accordance with the present invention,

Figure 5 is an explanatory view of teaching positions for setting the weaving motion,

Figures 6 and 7 are diagrams of correction vectors,

Figure 8 is an explanatory illustration of the input and output signals of the sensor circuit,

Figure 9 is a view showing the direction of welding torch control,

Figure 10 is an explanatory view of the automatic continuation of a weaving teaching pattern,

Figures 11 and 12 are explanatory views of the deflection angle between a teaching locus and an actual weld line,

Figure 13 is an explanatory view of a manner of profiling welding at a sharp corner in fillet welding,

Figure 14 is a partial enlarged explanatory view of Figure 13,

Figure 15 is a view illustrating the teaching points and the position of the welding torch in fillet welding,

Figures 16 and 17 are explanatory views of welding operation when the actual welding starting position is different from the teaching point,

Figure 18 is a block diagram of an embodiment of the control circuit in accordance with the present invention, and

Figure 19 is a block diagram of an embodiment of the servocontrol unit in accordance with the present invention.

In the drawing, reference numerals designate: 11 . . . welding torch, 12 . . . stand, 13 and 14 . . . arms, 15 . . . swivelling unit.

Figure 8

1° . . . Measurement starting command at weaving ends, 2° . . . Welding current or welding voltage, 3° . . . Right, 4° . . . Left, 5° . . . Up, 6° . . . Down, 7° . . . Locus correction signals.

Figure 9

1° . . . Up, 2° . . . Down, 3° . . . Right, 4° . . . Left.

Figure 11

1° . . . Teaching locus, 2° . . . Actual weld line.

Figure 12

1° . . . Actual weld line, 2° . . . Teaching locus.

Figure 13

1° . . . Teaching locus L2, 2° . . . Teaching locus L1, 3° . . . Actual weld line.

Figure 14

1° . . . Actual weld line, 2° . . . Locus of the center of weaving, 3° . . . Locus correction mode, 4° . . . Parallel shifting mode.

Figure 15

1° . . . Teaching locus, 2° . . . Flange, 3° . . . Web.

Figure 16

1° . . . Actual weld line, 2° . . . Actual welding starting position.

13

# 0 076 498

Figure 18

1°... Main CPU (Microprocessor), 2°... Macrocommand, 3°... Test condition, 4°... RALU status, 5°... Multiplexer, 6°... Control instruction, 7°... Sequence controller, 8°... Microprogram memory, 9°... Clock CP, 10°... Jump address, 11°... Pipe line register, 12°... Register, 13°... Locus correction signal, 14°... Welding current command, 15°... Fixed value, 16°... Sensor circuit, 17°... Welding current command, 18°... Welding current, 19°... Measurement starting command, 20°... Reset, 21°... Dispatch completion, 22°... Shaft T positioning servocommand, 23°... Dispatch completion, 24°... Shaft φ positioning command, 25°... Buffer, 26°... Clock φ, 27°... Dividing and leading edge differentiating circuit, 28°... Reset, 29°... Reference clock, 30°... Reference clock address generator, 31°... Arithmetic unit.

Figure 19

1°... from BRM, 2°... Shaft φ command pulse, 3°... Shaft θ command pulse, 4°... Shaft φ command pulse, 5°... Shaft B servocircuit, 6°... Shaft φ servocircuit, 7°... Shaft B servocircuit, 8°... Shaft T servocircuit, 9°... Shaft B command pulse, 10°... Shaft T command pulse, 11°... Shaft servocircuit, 12°... Deviation counter, 13°... Shaft φ motor, 14°... Tachogenerator, 15°... Pulse motor, 16°... Shaft B motor, 17°... Shaft φ motor, 18°... Shaft B motor, 19°... Shaft T motor.

## Claims

1. A method controlling an arc welding torch (11) of a welding robot (12—15) whereby a welding torch (11) is moved along a weld line based on a teaching line ($P_1$, $P_2$, $P_3$—Fig. 4) while making a welding torch tip (P) perform a weaving operation by altering its direction of movement characterised by

(I) moving the torch tip (P) parallel to the teaching line and continuous by detecting either an actual welding current or a welding voltage at both ends of said weaving operation,

(II) detecting when the said actual welding current or welding voltage exceeds a preset welding current or a preset welding voltage, and using the detection to generate correcting signals

(III) controlling three basic drive axes ($\phi$, $\theta$, $\varphi$) of said robot (12—15) so as to cause it to move parallel to the teaching line so as to correct the locus of said center of said weaving operation to bring it to the actual weld line (R).

2. A method according to claim 1, wherein the robot is a teaching playback welding robot (12—15) capable of moving the welding torch (11) thereof between teaching positions by linear interpolation.

3. A method according to claim 1 or 2, wherein said method further includes a step in which

(I) a robot wrist holding said welding torch (11) is provided with a predetermined bending angle (B) and turning angle (T) at a starting point and an ending point of a linear interpolation, and

(II) when said center of said weaving is projected on a line which connects said starting point and said ending point, said bending angle (B) and turning angle (T) of said robot wrist are changed at a uniform changing rate from said angles at said starting point to said angles at said ending end.

4. A method according to one or more of claims 1—3, comprising

(I) defining and teaching a monitoring point (P20) in addition to teaching points ($P_1$, $P_2$, $P_3$) for an ordinary welding operation to detect a corner of a workpiece, (II) computing a distance (m) between said monitoring point and the center of said weaving,

(III) recognizing said welding operation to be a profiling welding step to be presently welded and continuing a weld line tracking operation when said distance (m) is monotonically decreasing, or recognizing said corner of said step and completing said tracking operation in said step when said distance (m) exceeds a predetermined width of variation, and

(IV) controlling said center of weaving so as to make said center of weaving perform a profiling welding in a next step on the basis of a line having the position of said welding torch at said completion of said tracking operation in said preceding step as a starting point ($P_2''$) and a point ($P_3'$) which is determined by three dimensionally parallelly shifting a previously taught ending point ($P_3$) of said next step by a displacement vector between said starting point ($P_2''$) and said previously taught ending point of said preceding step ($P_2$) as an ending point (Fig. 4).

5. A method according to one or more of claims 1—4, comprising

(I) memorizing, in performing welding along a sharp corner such as a rectangular corner, a position ($x_{n-1}$, $y_{n-1}$, $z_{n-1}$) of said center of weaving at the generation of said preceding locus correction signal and a position ($x_{n-1}'$, $y_{n-1}'$, $z_{n-1}'$) of said center of weaving at the completion of said locus correction,

(II) determining an angle $\xi$ between a projection of a line l, connecting a position ($x_n$, $y_n$, $z_n$) of said center of weaving at the moment of generation of the instant locus correction signal and said position ($x_{n-1}$,

14

$y_{n-1}, z_{n-1})$ of said center of weaving at the generation of said preceding locus correction signal on a plane defined by a previously taught line $L_1$ $\overline{(P1\ P2)}$ and a line $L_2$ $\overline{(P2\ P3)}$ taught in a next step extending after said line $L_1$, and said line $L_1$,

(III) determining an angle $\eta$ between the projection of a line $l_2$ connecting a position $(x_n', y_n', z_n')$ of said center of weaving immediately after the completion of said locus correction and said position $(x_{n-1}', y_{n-1}', z_{n-1}')$ of said center of weaving at the completion of said preceding locus correction, on said plane defined by said lines $L_1$ and $L_2$, and said line $L_1$

(IV) computing a mean value of said angles and before and after every locus correction during said welding operation and,

(V) memorizing computed results sequentially in a FIFO memory circuit,

(VI) simultaneously recognizing said corner and clearing the contents of said FIFO memory circuit when said mean value memorized in said FIFO memory circuit becomes greater than a value of a function of a welding speed, a weaving frequency and an amount of locus correction to complete said welding operation in said step of said line $L_1$, and

(VII) shifting a tracking control for tracking a weld line of said next step by deciding that said welding operation is to be performed in said next step in which said center of weaving is to move on a line having a position of said welding torch tip at the completion of welding in said preceding step as a starting point $(P_2'')$ and a point $(P_3')$ determined by three-dimensionally parallelly shifting a previously taught ending point of a step of said line $L_2$ by a displacement vector $(P_2—P_2'')$ between said starting point $(P_2)$ and said previously taught ending point $(P_2'')$ of said line $L_1$ as an ending point (Fig. 13, 14).

6. A method according to one or more of claims 1—5, comprising

(I) extremely reducing a welding speed (v) and a welding current comparatively to a normal welding speed and a normal welding current respectively, and

(II) increasing a weaving frequency (h) and an amount of said locus correction (9) comparatively to said normal weaving frequency and said normal amount of locus correction, until said welding torch reaches said actual weld line $(P_2'')$ in case said actual weld starting position $(P_1'')$ is deviated from the previously taught welding starting position $(P_1')$ (Fig. 16, 17).

7. A method according to one or more of claims 1—6, comprising

(I) teaching three points $(Q_1, Q_2, Q_3)$ in the neighborhood of a weld line to designate a weaving pattern, and

(II) controlling three basic axes of a welding robot so that a welding torch tip moves along one of transverse surfaces of a triangular prism formed by shifting a triangular plane defined by said three points $(Q_1, Q_2, Q_3)$ in a direction of said weld line $\overline{(P1\ P2)}$, while executing a weaving operation which is determined by a weaving amplitude, a weaving frequency and a welding velocity (Fig. 10).

8. A method according to claim 7, wherein said three teaching points $(Q_1, Q_2, Q_3)$ defining said weaving operation are set in the neighborhood of a first weld line $\overline{(P1\ P2)}$ and said weaving operation is automatically continued on a second and successive weld line $\overline{(P2\ P3)}$ through computing the three-dimensional parallel shifting and the rotation $(\omega_o)$ of said plane defined by said three teaching points $(Q_1, Q_2, Q_3)$ (Fig. 10).

9. A method according to claim 1, comprising controlling said three basic axes of the robot so that said center of weaving (W) moves on a locus $(l_1, l_2, l_3)$ determined by three-dimensionally parallelly shifting a line connecting two teaching points $(P_1, P_2)$ which are originally taught for linear interpolation, by a locus correction vector (Fig. 4).

**Patentansprüche**

1. Verfahren zur Steuerung eines Lichtbogenschweissbrenners (11) eines Schweiss-Roboters (12—15), vermittels dessen ein Schweissbrenner (11) entlang einer Schweisslinie auf der Basis einer Instruktionslinie $(P_1, P_2, P_3$—Fig. 4) bewegt wird, während der Schweissbrenner-Kopf (P) unter Änderung seiner Bewegungsrichtung einen Pendelvorgang ausführt, gekennzeichnet durch

(I) eine Bewegung des Brennerkopfs (P) parallel zur Vorderkante sowie kontinuierliche Ermittlung entweder eines tatsächlichen Schweiss-Stroms oder einer Schweiss-Spannung an beiden Enden des Pendelvorgangs

(II) Registrierung einer Überschreitung eines voreingestellten Schweiss-Stroms oder einer voreingestellten Schweiss-Spannung unter Nutzung dieser Registrierung zur Erzeugung von Korrektur-Signalen

(III) Steuerung der drei Antriebsgrundwellen $(\phi, \theta, \varphi)$ des Roboters (12—15), um diesen zu einer zu der Instruktionslinie parallelen Bewegung zu veranlassen, um die Ortskurve des Mittelpunkts des Pendelvorgangs zu korrigieren, um sie auf die eigentliche Schweisslinie (R) zu bringen.

**0 076 498**

2. Verfahren nach Anspruch 1, dadurch gekennzeichnet, dass der Roboter ein Lehr-Playback-Schweiss-Roboter (12—15) ist, welcher dessen Schweissbrenner zwischen Lehrpositionen durch lineare Interpolation bewegen kann.

3. Verfahren nach Anspruch 1 oder 2, dadurch gekennzeichnet, dass dieses einen Schritt beinhaltet, in welchem

(I) ein den Schweissbrenner (11) haltendes Roboter-Gelenk einen vorbestimmten Biegeinkel (B) und einen Drehwinkel (T) an einem Anfangspunkt und an einem Endpunkt einer linearen Interpolation aufweist, und

(II) der Biegewinkel (B) und der Drehwinkel (T) des Robotergelenks bei Projizierung des Pendelzentrums auf eine Anfangs- und Endpunkte verbindende Linie mit gleichförmiger Änderungsgeschwindigkeit aus den Anfangspunktwinkeln in die Endpunktwinkel geändert werden.

4. Verfahren nach einem oder mehreren der Ansprüche 1—3, gekennzeichnet durch

(I) Definierung und Instruierung eines Überwachungspunkts (P20) zusätzlich zu Instruierungspunkte ($P_1$, $P_2$, $P_3$) für einen üblichen Schweissvorgang zur Auffindung einer Ecke in einem Werkstück,

(II) Berechnung eines Abstands (m) zwischen dem Überwachungspunkt und dem Pendelmittelpunkt,

(III) Identifizierung des Schweissvorgangs als derzeit auszuführende Profilschweissung, sowie Fortsetzung einer Schweisslinien-Spurung, wenn der Abstand (m) monoton abnimmt, oder Identifizierung der Ecke dieses Schrittes und Beendigung des Spurungsvorgnags in diesem Schritt, wenn der Abstand (m) eine vorbestimmte Variationsbreite überschreitet, und

(IV) Steuerung des Pendelmittelpunkts, so dass der Pendelmittelpunkt eine Profilschweissung in einem nächsten Schritt auf der Basis einer Linie durchführt, welche die Position des Schweissbrenners zum Zeitpunkt der Beendigung des Spurungsvorgangs im vorangehenden Schritt als Startpunkt ($P_2''$) und als Punkt ($P_3'$) einnimmt, welcher durch dreidimensionale Parallelverschiebung eines zuvor angegebenen Endpunkts ($P_3$) des nächsten Schritts durch einen Verschiebungsvektor zwischen dem Startpunkt ($P_2''$) und dem zuvor angegebenen Endpunkt des vorangehenden Schrittes ($P_2$) als einem Endpunkt (Fig. 4) ermittelt wird.

5. Verfahren nach einem oder mehreren der Ansprüche 1—4, gekennzeichnet durch

(I) Speicherung während der Durchführung eines Schweissvorgangs entlang einer scharfen Ecke, beispielsweise einer rechtwinkligen Ecke, einer Position ($x_{n-1}$, $y_{n-1}$, $z_{n-1}$) des Pendelmittelpunkts bei der Erzeugung des vorangehenden Ortskurven-Korrektur-Signals, sowie einer Position ($x_{n-1}'$, $y_{n-1}'$, $z_{n-1}'$) des Pendelzentraums bei Beendigung der Ortskurven-Korrektur,

(II) Ermittlung eines Winkels ξ zwischen einer Projektion einer Linie l, welche eine Position ($x_n$, $y_n$, $z_n$) des Pendelzentrumas zum Zeitpunkt der Erzeugung des augenblicklichen Ortskurven-Korrektur-Signals und die Position ($x_{n-1}$, $y_{n-1}$, $z_{n-1}$) des Pendelzentrumas zum Zeitpunkt der Erzeugung des vorangehenden Ortskurven-Korrektur-Signals verbindet, auf eine von einer zuvor angegebenen Linie $L_1$ (P1 P2) und einer in einem nächsten hinter der Linie $L_1$ verlaufenden Schritt angegebenen Linie $L_2$ (P2 P3) definierte Ebene und der Linie $L_1$,

(III) Ermittlung eines Winkels η zwischen der Projektion einer Linie $l_2$, welche eine Position ($x_n'$, $y_n'$, $z_n'$) des Pendelzentrums unmittelbar nach Beendigung der Ortskurven-Korrektur und die Position ($x_{n-1}'$, $y_{n-1}'$, $z_{n-1}'$) des Pendelzentrums nach Beendigung der vorangehenden Ortskurven-Korrektur verbindet, auf die von den Linien $L_1$ und $L_2$ definierte Ebene und der Linie $L_1$

(IV) Berechnung eines mittleren Werts der Winkel vor und nach jeder Ortskurven-Korrektur während des Schweissvorgangs, und

(V) sequentielle Speicherung der berechneten Ergebnisse in einer FIFO-Speicherschaltung

(VI) gleichzeitige Identifizierung der Ecke und Löschcung des Inhalts der FIFO-Speicherschaltung, sobald der in der Speicherschaltung gespeicherte mittlere Wert den Wert einer Funktion einer Schweissgeschwindigkeit, einer Pendelfrequenz und eines Ortskurven-Korrekturbetrages zur Durchführung des Schweissvorgangs in diesem Schritt der Linie $L_1$ überschreitet, und

(VII) Verschiebung einer Spurungssteuerung zur Spurung einer Schweisslinie des nächsten Schritts durch die Entscheidung, dass der Schweissvorgang im nächsten Schritt zu erfolgen hat, in welchem sich das Pendelzentrum auf einer Linie bewegen soll, welche eine Position des Schweissbrennerkopfes bei Beendigung der Schweissung in dem vorangehenden Schritt als Startpunkt ($P_2''$) und Punkt ($P_3'$) einnimmt, der durch dreidimensionale Parallelverschiebung eines zuvor gemeldeten Endpunkts einer Stufe der Linie $L_2$ um einen Verschiebungs-Vektor ($P_2$—$P_2''$) zwischen dem Startpunkt ($P_2$) und dem zuvor gemeldeten Endpunkt ($P_2''$) der Linie $L_1$ als Endpunkt ermittelt wurde (Fig. 13, 14).

6. Verfahren nach einem oder mehreren der Ansprüche 1—5, gekennzeichnet durch

(I) extreme Reduzierung einer Schweissgeschwindigkeit (v) und eines Schweiss-Stroms auf eine vergleichsweise normale Schweissgeschwindigkeit bzw. einen normalen Schweiss-Strom, und

16

(II) Steigerung einer Pendelfrequenz (h) und eines Betrages der Ortskurven-Korrektur (9) auf die vergleichsweise normale Pendelfrequenz und den normalen Ortskurven-Korrekturbetrag, bis der Brenner die tatsächliche Schweisslinie (P2") erreicht, falls die tatsächliche Schweiss-Start-Position ($P_1$") von der zuvor gemeldeten Schweiss-Start-Position ($P_1$') abweicht (Fig. 16, 17).

7. Verfahren nach einem oder mehreren der Ansprüche 1—6, gekennzeichnet durch

(I) Meldung dreier Punkte ($Q_1$, $Q_2$, $Q_3$) in der Nachbarschaft einer Schweisslinie zur Skizzierung eines Pendelmusters, und

(II) Steuerung dreier Grundachsen eines Schweissroboters, derart, dass sich ein Schweissbrennerkopf während der Ausführung eines von einer Pendelamplitude, einer Pendelfrequenz und einer Schweissgeschwindigkeit bestimmten Pendelvorgangs entlang einer der Querflächen eines dreieckigen durch Verschiebung einer durch die drei Punkte ($Q_1$, $Q_2$, $Q_3$) definierten rechteckigen Ebene in einer Richtung der Schweisslinie $\overline{(P1\ P2)}$ gebildeten Primsmas bewegt (Fig. 10).

8. Verfahren nach Anspruch 7, dadurch gekennzeichnet, dass die drei den Pendelvorgang definierenden Meldepunkte ($Q_1$, $Q_2$, $Q_3$) in der Nachbarschaft einer ersten Schweisslinie $\overline{(P1\ P2)}$ gesetzt werden und der Pendelvorgang automatisch auf einer zweiten und nachfolgenden Schweisslinie $\overline{(P2\ P3)}$ durch Berechnung der drei-dimensionalen Parallelverschiebung und der Rotation $\omega_o$ der durch die drei Meldepunkte ($Q_1$, $Q_2$, $Q_3$) definierten Ebene fortgesetzt wird (Fig. 10).

9. Verfahren nach Anspruch 1, gekennzeichnet durch Steuerung der drei Grundachsen des Roboters, derart, dass sich der Pendelmittelpunkt (W) auf einer Ortskurve ($I_1$, $I_2$, $I_3$) bewegt, die von der drei-dimensionalen Parallelverschiebung einer zwei Meldepunkte ($P_1$, $P_2$) verbindenden Linie um einen Ortskurven-Korrektur-Vektor bestimmt wird (Fig. 4).

**Revendications**

1. Procédé pour commander une torche (11) de soudage à l'arc d'un robot de soudage (12—15), selon lequel une torche de soudage (11) est déplacée suivant une ligne de soudure en fonction d'une ligne d'apprentissage ($P_1$, $P_2$, $P_3$, figure 4) tout en faisant exécuter par l'extrémité (P) de la torche de soudage une opération de balayage par alternance de son sens de déplacement, caractérisé en ce que

(I) on déplace l'extrémité (P) de la torche parallèlement à la ligne d'apprentissage et on détecte en continu soit l'intensité de soudage, réelle, soit la tension de soudage réelle à deux extrémités d'une course de balayage,

(II) on détecte si l'intensité de soudage, réelle ou la tension de soudage réelle dépassent une intensité de soudage prédéterminée ou une tension de soudage prédéterminée et on utilise cette détection pour générer des signaux de correction,

(III) on commande trois axes d'entraînement de base ($\phi$, $\theta$, $\phi$) du robot (12—15) de façon à les faire déplacer parallèlement au lieu corrigé du milieu du mouvement de balayage en le mettant sur la ligne de soudage réelle (R).

2. Procédé selon la revendication 1, caractérisé en ce que le robot est un robot de soudage de copies par apprentissage (12—15) permettant de déplacer la torche de soudage (11) entre les positions d'apprentissage par interpolation linéaire.

3. Procédé selon les revendications 1 ou 2, caractérisé en ce qu'il comprend, en outre, l'étape suivante:

(I) est prévu une poignée de robot qui tient la torche de soudage (11) et présente un angle de pliage prédéterminé (B) et un angle de rotation (T) au point de départ et au point final d'une interpolation linéaire, et

(II) lorsque le milieu du balayage est projeté sur une ligne qui relie le point de départ et le point final, cet angle de pliage (B) et l'angle de rotation (T) de la poignée du robot sont modifiés suivant un rapport changeant de manière uniforme entre les angles au point de départ et les angles au point d'arrivée.

4. Procédé selon l'une ou plusieurs des revendications 1 à 3, caractérisé en ce qu'il comprend les étapes suivantes

(I) on définit et on fait l'apprentissage d'un point de contrôle (P20) en plus des points d'apprentissage ($P_1$, $P_2$, $P_3$) pour une opération de soudage habituelle, pour détecter un coin de pièce,

(II) on calcule une distance (m) entre le point de contrôle et le milieu du balayage,

(III) on reconnaît que l'opération de soudage est une opération de soudage de profilage qui doit maintenant être exécutée et on poursuit l'opération de traçage de la ligne de soudage si la distance (m) diminue de manière monotone ou encore on reconnaît le coin dans cette étape et on complète l'opération de traçage au cours de cette étape si la distance (m) dépasse une amplitude de variation déterminée, et

(IV) on commande le milieu du balayage de façon que ce milieu du balayage correspond à l'exécution d'un soudage de profilage au cours de l'étape suivante en fonction d'une ligne ayant la position de la torche de soudage à la fin de cette opération de traçage dans l'étape précédente au point de départ ($P_2''$) et un point ($P_3'$) qui est déterminé par le décalage en parallèle en trois dimensions d'un point final ($P_3$) enseigné précédemment de l'étape suivante par un vecteur de déplacement entre le point de départ ($P_2''$) et le point final enseigné précédemment de l'étape précédente ($P_2$) comme point final (figure 4).

5. Procédé selon l'une ou plusieurs des revendications 1—4, caractérisé en ce qu'il comprend:

(I) on met en mémoire lorsqu'on exécute la soudure le long d'un coin a arête vive tel qu'un coin rectangulaire, une position ($x_{n-1}$, $y_{n-1}$, $z_{n-1}$) du milieu du balayage lorsqu'on génére le signal de correction du lieu précédent et une position ($x_{n-1}'$, $y_{n-1}'$, $z_{n-1}'$) du milieu du balayage à la fin de la correction du lieu,

(II) on détermine l'angle $\xi$ entre une projection de la ligne l, reliant une position ($x_n$, $y_n$, $z_n$) du milieu du balayage au moment où on génére le signal de correction du lieu instantané et la position ($x_{n-1}$, $y_{n-1}$, $z_{n-1}$) du milieu du balayage lorsqu'on génére le balayage du signal de correction du lieu précédent sur un plan défini par une ligne $L_1$ ($\overline{P1\ P2}$) enseignée précédemment et une ligne $L_2$ ($\overline{P2\ P3}$) enseignée au cours d'une étape suivante s'étendant après la ligne $L_1$, et

(III) on détermine l'angle $\eta$ entre la projection d'une ligne $l_2$ reliant une position ($x_n'$, $y_n'$, $z_n'$) du milieu du balayage immédiatement après l'exécution de la correction de lieu et la position ($x_{n-1}'$, $y_{n-1}'$, $z_{n-1}'$) du milieu du balayage à la fin de la correction du lieu précédent sur le plan défini par les lignes $L_1$ et $L_2$,

(IV) on calcule une valeur moyenne de ces angles et avant et après chaque correction de lieu pendant l'opération de soudage et,

(V) on met en mémoire séquentiellement les résultats calculés dans une mémoire FIFO,

(VI) simultanément on reconnaît le coin et l'on efface le contenu de la mémoire FIFO si la valeur moyenne enregistrée dans la mémoire FIFO est supérieure à une valeur d'une fonction de la vitesse de soudage, de la fréquence de balayage et de l'amplitude de la correction de lieu pour terminer cette opération de soudage au cours de cette étape de la ligne $L_1$, et

(VII) on décale une commande de trace pour tracer une ligne de soudage de l'étape suivante en décidant que l'opération de soudage à effectuer au cours de l'étape suivante pendant laquelle le milieu du balayage doit se déplacer sur une ligne passant de la position de l'extrémité de la torche de soudage à la fin du soudage de l'étape précédente comme point de départ ($P_2''$) et un point ($P_3'$) déterminé par un décalage en parallèle dans trois dimensions comme point d'extrémité enseigné d'une étape de la ligne $L_2$ par un vecteur de déplacement ($P_2$—$P_2''$) entre ce point de départ ($P_2$) et le point d'arrivée ($P_2''$) enseigné précédemment de la ligne $L_1$ comme point d'extrémité (figures 13, 14).

6. Procédé selon l'une ou plusieurs des revendications 1—5, caractérisé en ce que

(I) on réduit de manière extrême la vitesse de soudage (v) et l'intensité de soudage par comparaison à une vitesse de soudage normale et un courant de soudage normal, et

(II) on augmente la fréquence de balayage (h) et le degré de correction du lieu (9) par comparaison à la fréquence de balayage normal et au degré de correction local, normal, jusqu'à ce que la torche de soudage atteigne la ligne de soudage ($P_2''$) au cas où la position de soudage réelle ($P_1''$) est déviée de la position de départ de soudage ($P_1'$) enseignée précédemment (figure 16, 17).

7. Procédé selon l'une ou plusieurs des revendications 1—6, caractérisé en ce que

(I) on enseigne trois points ($Q_1$, $Q_2$, $Q_3$) au voisinage d'une ligne de soudage pour désigner un schéma de balayage, et

(II) on commande les trois axes de base d'un robot de soudage de façon qu'une extrémité de la torche de soudage se déplace le long de l'une des surfaces transversales d'un prisme triangulaire obtenu par décalage d'un plan triangulaire défini par les trois points ($Q_1$, $Q_2$, $Q_3$) dans la direction de la ligne de soudage ($\overline{P1\ P2}$), tout en exécutant une opération de balayage qui est déterminée par une amplitude de balayage, une fréquence de balayage, une vitesse de soudage (figure 10).

8. Procédé selon la revendication 7, caractérisé en ce que les trois points d'enseignement ($Q_1$, $Q_2$, $Q_3$) définissant l'opération de balayage sont fixés au voisinage d'une première ligne de soudage ($\overline{P1\ P2}$) et l'opération de soudage se poursuit automatiquement sur une seconde ligne de soudage, successive ($\overline{P2\ P3}$) par calcul du décalage parallèle tridimensionel et rotation ($\omega_0$) du plan défini par les trois points d'enseignement ($Q_1$, $Q_2$, $Q_3$) (figure 10).

9. Procédé selon la revendication 1, caractérisé en ce qu'on commande les trois axes de base du robot de manière que le milieu du balayage (W) se déplace suivant un lieu ($l_1$, $l_2$, $l_3$) déterminé par le décalage parallèle tridimensionnel d'une ligne reliant deux points d'enseignement ($P_1$, $P_2$) initialement enseignée par interpolation linéaire par un vecteur de correction de lieu (figure 4).

FIG. 1a

FIG.1b

FIG. 2

FIG.3

FIG.4

FIG.5

FIG.6

FIG.7

# FIG.8

MEASUREMENT STARTING COMMAND AT WEAVING ENDS

WELDING CURRENT
OR WELDING VOLTAGE → [ ] → UP
DOWN
LEFT
RIGHT } LOCUS CORRECTION SIGNAL

# FIG.9

# FIG.10

4

## FIG.11

TEACHING LOCUS

$\zeta$

$P_1$                    $P_2$

$\zeta$

ACTUAL WELD
LINE

## FIG. 12

ACTUAL WELD LINE

$\zeta$

$P_1$           $P_2$

$\zeta$

TEACHING LOCUS

## FIG.13

$P_3$    $P_3{}'$

TEACHING LOCUS $L_2$

$P_2{}'''$

$\zeta max$

TEACHING LOCUS $L_1$    $P_2$

$P_1$          $P_2{}''$   $P_n{}'$

$P_1{}'$        $P_2{}'$   $\zeta max$

ACTUAL WELD LINE

# FIG.14

ACTUAL WELD LINE

LOCUS OF THE CENTER OF WEAVING

$l_1$  $l_2$  $l_2$

⑦'  ⑥'  ⑤'  ④  ③'  ②'  ①'

⑦  ⑥  ⑤  ④  ③  ②  ①

$l_1$

LOCUS CORRECTION MODE

PARALLEL SHIFTING MODE

# FIG.15a

$P_5$

$t$

$P_1$

$P_4$

$P_3$

$P_2$

TEACHING LOCUS

# FIG.15b

WEB

$t$

tFlange

6

FIG.16a

$P_1'$

$P_1$

FIG.16b

$P_2'$

ACTUAL
WELD LINE

$\zeta$ max

$P_1''$

$P_1'$

$m_1$

$m_2$

ACTUAL WELDING STARTING POSITION

FIG.17a

11

$P_1'$

$P_1$

FIG.17b

$P_1'$

$m_2$

$P_1''$

$m_1$

7 .

# FIG.18

# FIG.19

Φ AXIS, SERVO CIRCUIT

Φ AXIS COMMAND PULSE

FROM BRMs

φ AXIS COMMAND PULSE

θ AXIS COMMAND PULSE

θ AXIS SERVO CIRCUIT

**611** DEVIATION COUNTER **612** D/A **613** **614** MI **615** TG **616** PG **121**

**621** **622** D/A **623** **624** M2 **625** TG **626** PG **122**

φ AXIS SERVO CIRCUIT

**631** **632** D/A **633** **634** M3 **635** TG **636** PG **123**

B AXIS COMMAND PULSE

B AXIS SERVO CIRCUIT

**641** **642** D/A **643** **644** M4 **645** TG **646** PG **124**

T AXIS COMMAND PULSE

T AXIS SERVO CIRCUIT

**651** **652** D/A **653** **654** M5 **655** TG **656** PG **125**